# EUROPEAN PATENT APPLICATION

(11) **EP 4 831 612 A1**
(43) Date of publication of application: **28.10.2026**
(21) Application number: 26173261.4
(22) Date of filing: 20.04.2026
(51) Int. Cl.: G01N 15/1433, G01N 15/14, G01N 15/0227, G01N 15/02, G01N 15/10, G01N 15/1434

(54) **METHOD FOR CHARACTERIZING CELLULAR HETEROGENEITY IN COMPLEX CELL SAMPLES BY AUTOFLUORESCENCE AND IMAGING PARAMETERS IN FLOW CYTOMETRY DATA, SYSTEMS AND NON-TRANSITORY COMPUTER READABLE STORAGE MEDIUM FOR SAME**

(30) Priority: 25.04.2025 US 202519190226
(71) Applicant: Becton Dickinson and Company, Franklin Lakes, NJ 07417-1880 (US)
(72) Inventor: Sen, Moen, Franklin Lakes, 07417-1880 (US); Bornheimer, Scott Joseph, Franklin Lakes, 07417-1880 (US); Middlebrook, Aaron Jacob, Franklin Lakes, 07417-1880 (US); Tyznik, Aaron Jacob, Franklin Lakes, 07417-1880 (US); Widmann-Nguyen, Stephanie J., Franklin Lakes, 07417-1880 (US)
(74) Representative: Arnold & Siedsma

(57) **Abstract**

Aspects of the present disclosure include methods for characterizing cellular heterogeneity in complex cell samples by flow cytometry. Methods according to certain embodiments include irradiating a sample having cells in a flow stream with a light source in a flow cytometer, measuring light from the irradiated cells with an imaging photodetector of a light detection system, measuring autofluorescence spectra generated by the irradiated cells in the sample with a spectral photodetector, calculating a cell parameter based on image data generated from the measured light, generating one or more population clusters based on the measured autofluorescence spectra and the calculated cell parameter, assessing morphological heterogeneity of the cells in each of the population clusters and classifying particles of the population clusters based on the assessed morphological heterogeneity. Systems and non-transitory computer-readable storage media configured to carry out the subject methods are also provided.

## Description

### INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left un-charged.

Studying cellular heterogeneity is crucial for understanding disease mechanisms, for example in cancer, where diverse cell populations can lead to drug resistance. It enables the development of personalized medicine by modifying treatments to a patient's disease. Uncovering heterogeneity also sheds light on developmental biology, revealing how different cell types emerge and function. Additionally, it aids in drug development by identifying new targets and understanding cell susceptibility to drugs. In plants, understanding cellular heterogeneity is essential for understanding how different cell types contribute to development, adaptation to environmental changes, and responses to biotic and abiotic stresses.

### SUMMARY

The inventors realized that relevant biological information generated in flow cytometry is often obscured by autofluorescence and can result in misidentification of cells in a complex heterogeneous sample. Autofluorescence is generally viewed as being a major challenge because autofluorescence obscures signals from specific fluorescent markers and can vary between cell types and under different conditions. Furthermore, the comparison between instrument platforms, particularly when different fluorophores are used to detect the same combination of marker becomes too difficult to compare because the autofluorescence of cells in the sample may vary and intra-sample heterogeneity will convolute the results. Embodiments of the present disclosure address the above, among other, problems. The inventors have determined that autofluorescence spectral data can be used as an informative parameter for characterizing heterogeneity of cellular samples with high autofluorescence, in particular intra-sample heterogeneity. The inventors have discovered the use of autofluorescence spectra to quantify changes in imaging parameters of cells and in assessing morphological heterogeneity.

The present disclosure includes a method for characterizing cellular heterogeneity in complex cell samples by flow cytometry. The method according may include irradiating a sample having cells in a flow stream with a light source in a flow cytometer, measuring light from the irradiated cells with an imaging photodetector of a light detection system, measuring autofluorescence spectra generated by the irradiated cells in the sample with a spectral photodetector, calculating a cell parameter based on image data generated from the measured light, generating one or more population clusters based on the measured autofluorescence spectra and the calculated cell parameter, assessing morphological heterogeneity of the cells in each of the population clusters and classifying particles of the population clusters based on the assessed morphological heterogeneity. A system and non-transitory computer-readable storage media configured to carry out the method are also provided.

The autofluorescence spectra may measured by the imaging photodetector in an imaging channel of the light detection system. The autofluorescence spectra may be measured by the spectral photodetector in a spectral channel. Measuring the autofluorescence may be performed by one of a plurality of spectral photodetectors and methods further include selecting the one photodetector channel of the plurality of spectral photodetectors based on the spectral profile of the autofluorescence. The method may further include selecting the autofluorescence spectra to the photodetector channel based on a maximal intensity of the autofluorescence.

The method may include calculating cell parameters based on image data generated from the measured light. The cell parameters may be calculated from data signals generated in an imaging photodetector channel of the light detection system. The cell parameters may be calculated from data signals generated in a plurality of different imaging photodetector channels of the light detection system. At least one cell parameter may be calculated from data signals generated in spectral photodetector channels of the light detection system. At least one cell parameter may be calculated from data signals generated in a plurality of spectral photodetector channels of the light detection system. The method may include calculating one or more image parameters from the image data or a generated image of the cells. The cell parameter may be calculated based on the image parameter. The image parameter may be a quantitative image parameter. The parameter may be selected from center of mass, delta center of mass, diffusivity, eccentricity, long axis moment, maximum intensity, radial moment, short axis moment, size, total intensity, light loss by the cell nuclei, forward scattered light by the cell nuclei, side scattered light by the cell nuclei and combinations thereof. The image parameter may be calculated from images generated based on fluorescence measured from the cells, light loss measured for the cells, forward scattered light measured for the cells, side scattered light measured for the cells and combinations thereof.

The one or more population clusters may be generated by dimensionality reduction. The dimensionality reduction may include Uniform Manifold Approximation and Projection (UMAP) or t-distributed stochastic neighbor embedding (t-SNE). Generating the population clusters may include K-nearest neighbors (KNN) clustering. The clusters may be generated by unsupervised dimensionality reduction. The method may include assessing cell populations in the generated clusters with a cluster explorer. Unique clusters may be backgated.

The morphological heterogeneity of the cells may be assessed in one or more of the generated population clusters. The method may include assessing the heterogeneity of the cells in each of the generated population clusters. The heterogeneity may be assessed based on one or more of the cell parameters. The heterogeneity may be assessed based on observations from images of the cells in the population clusters. Cells having different heterogeneity may be identified and gated together.

The method may include quantifying a change in the cells of the sample. Assessing the heterogeneity of the cells of the sample may include determining that there has been a change in the cells in the sample. Quantifying the change in the cells may include quantifying a change in the autofluorescence spectra of the cells in the sample. Quantifying the change in the cells may include quantifying a change in an image parameter of the cells. Heterogeneity of the cells may be determined based on a change in the autofluorescence spectra of the cells. The heterogeneity of the cells may be determined based on a change in autofluorescence intensity measured from the cells. Heterogeneity of the cells may be determined based on a change in imaging parameters of one or more population clusters. The change in imaging parameters may include one or more of eccentricity, center of mass and size. The cells may be autotrophic cells, heterotrophic cells, tumor cells, immune cells, bacteria or lineage-labeled cells.

The method may include classifying cells of the sample based on the assessed morphological heterogeneity. The cells may be classified based on autofluorescence spectra, changes in autofluorescence spectra or autofluorescence intensity. The cells may be classified based on image parameters, calculated cell parameters or visualized observations from images of the cells. One or more population clusters may be classified. One or more subset groups from each population clusters may be classified.

Classifying the cells may include determining one or more gates for the cells in each of the population clusters of the sample. The gates may be sorting gates (e.g., for use in generating a sorting decision).The one or more sorting gates may capture cells of a target particle population cluster and exclude particles of a non-target particle population cluster. The sorting gates may maximize the inclusion yield of cells of a target particle population cluster. The sorting gates may maximize the exclusion of cells of a non-target particle population cluster.

The method may include sorting cells of the sample into a plurality of sample containers. The method may include sorting cells of the sample based on the assessed morphological heterogeneity. The cells may be sorted based on autofluorescence spectra, changes in autofluorescence spectra or autofluorescence intensity. The cells may be sorted based on image parameters, calculated cell parameters or visualized observations from images of the cells. The cells may be sorted based on the generated images of the cells. The cells may be sorted based on the calculated image parameters.

The method may include irradiating the sample with frequency-modulated beams of light. The sample may be irradiated in a flow stream. The light source may include one or more lasers. Light may be detected with a light detection system having a plurality of photodetectors. One or more of the photodetectors may be a photomultiplier tube. One or more of the photodetectors may be a photodiode (e.g., an avalanche photodiode, APD). The light detection system may include a photodetector array, such as a photodetector array having a plurality of photodiodes or charged coupled devices (CCDs).

The present disclosure also includes a system for practicing the method A system according to the present disclosure may include a light source configured to irradiate cells of a sample with light in a flow stream, a light detection system comprising an imaging photodetector and a spectral photodetector for measuring light from the irradiated cells and a processor having memory operably coupled to the processor where the memory includes instructions stored thereon, which when executed by the processor, cause the processor to measure autofluorescence spectra generated by the cells in the sample with the spectral photodetector, calculate a cell parameter based on image data generated from the measured light, generate one or more population clusters based on the measured autofluorescence spectra and the calculated cell parameter, assess morphological heterogeneity of the cells in each of the population clusters and classify particles of the population clusters based on the assessed morphological heterogeneity.

The light detection system may include imaging photodetector channels and spectral photodetector channels. The light detection system may be configured to measure the autofluorescence spectra by the imaging photodetector in the imaging channel. The light detection system may be configured to measure the autofluorescence spectra by the spectral photodetector in the spectral channel. The light detection system may include a plurality of spectral photodetectors and the memory includes instructions for selecting the one photodetector channel of the plurality of spectral photodetectors based on the spectral profile of the autofluorescence. The memory may include instructions for selecting the one photodetector channel based on a maximal intensity of the autofluorescence.

The memory may include instructions for calculating cell parameters based on image data generated from the measured light. The memory may include instructions for calculating the cell parameters from data signals generated in an imaging photodetector channel of the light detection system. The memory may include instructions for calculating the cell parameters from data signals generated in a plurality of different imaging photodetector channels of the light detection system. The memory may include instructions for calculating at least one cell parameter from data signals generated in spectral photodetector channels of the light detection system. The memory may include instructions for calculating at least one cell parameter from data signals generated in a plurality of spectral photodetector channels of the light detection system. The memory may include instructions for calculating one or more image parameters from the image data or a generated image of the cells. The memory may include instructions for calculating the cell parameter based on the image parameter. The image parameter may be a quantitative image parameter. The parameter may be selected from center of mass, delta center of mass, diffusivity, eccentricity, long axis moment, maximum intensity, radial moment, short axis moment, size, total intensity, light loss by the cell nuclei, forward scattered light by the cell nuclei, side scattered light by the cell nuclei and combinations thereof. The memory may include instructions for calculating the image parameter from images generated based on fluorescence measured from the cells, light loss measured for the cells, forward scattered light measured for the cells, side scattered light measured for the cells and combinations thereof.

The memory may include instructions for generating the one or more population clusters by dimensionality reduction. The dimensionality reduction may include Uniform Manifold Approximation and Projection (UMAP) or t-distributed stochastic neighbor embedding (t-SNE). Generating the population clusters may include K-nearest neighbors (KNN) clustering. The memory may include instructions for generating the clusters by unsupervised dimensionality reduction. The memory may include instructions for assessing cell populations in the generated clusters with a cluster explorer. The memory may include instructions for backgating unique clusters.

The memory may include instructions for assessing the morphological heterogeneity of the cells in one or more of the generated population clusters. The memory may include instructions for assessing the heterogeneity of the cells in each of the generated population clusters. The memory may include instructions for assessing the heterogeneity based on one or more of the cell parameters. The memory may include instructions for determining the heterogeneity based on observations from images of the cells in the population clusters. The memory may includeinstructions for identifying and gating together cells having different heterogeneity.

The memory may include instructions for quantifying a change in the cells of the sample. The memory may include instructions for assessing the heterogeneity of the cells of the sample by determining that there has been a change in the cells in the sample. The memory may include instructions for quantifying the change in the cells by quantifying a change in the autofluorescence spectra of the cells in the sample. The memory may include instructions for quantifying the change in the cells by quantifying a change in an image parameter of the cells. The memory may include instructions for determining heterogeneity of the cells based on a change in the autofluorescence spectra of the cells. The memory may include instructions for determining the heterogeneity of the cells based on a change in autofluorescence intensity measured from the cells. The memory may include instructions for determining heterogeneity of the cells based on a change in imaging parameters of one or more population clusters. In certain instances, the change in imaging parameters includes one or more of eccentricity, center of mass and size. The cells may be autotrophic cells, heterotrophic cells, tumor cells, immune cells, bacteria or lineage-labeled cells.

The memory may include instructions for classifying cells of the sample based on the assessed morphological heterogeneity. In some instances, the memory includes instructions for classifying the cells based on autofluorescence spectra, changes in autofluorescence spectra or autofluorescence intensity. In some instances, the memory includes instructions for classifying the cells based on image parameters, calculated cell parameters or visualized observations from images of the cells. In some instances, one or more population clusters are classified. In certain instances, one or more subset groups from each population clusters are classified.

In some instances, the memory includes instructions for classifying the cells by determining one or more gates for the cells in each of the population clusters of the sample. In some instances, the gates are sorting gates (e.g., for use in generating a sorting decision). In some instances, the one or more sorting gates capture cells of a target particle population cluster and exclude particles of a non-target particle population cluster. In some instances, the sorting gates maximize the inclusion yield of cells of a target particle population cluster. In some instances, the sorting gates maximize the exclusion of cells of a non-target particle population cluster.

In some embodiments, the light source is a light emitting diode. In some embodiments, systems include a light source having one or more lasers, such as a plurality of lasers. In some instances, the light detection system includes a plurality of photodetectors. In some instances, the photodetectors include one or more photomultiplier tubes. In some instances, the light detection system includes a photodetector array. In certain instances, one or more of the photodetectors in the array is a photodiode (e.g., an avalanche photodiode). In certain instances, one or more of the photodetectors in the array are charged coupled devices. In some instances, the system is configured to detect light by the light detection system in a plurality of photodetector channels. In some embodiments, the generated spectral data signals are a sum of the data signals collected across a plurality of photodetector channels.

In certain embodiments, systems include a display for displaying a graphical user interface. In some instances, the graphical user interface is configured for manually inputting one or more of the sorting gates. In some instances, the sorting gates are manually input into the graphical user interface by drawing sorting gates on a scatter plot of the particle population clusters. In some instances, the sorting gate is a hyper-rectangular sorting gate.

Aspects of the present disclosure also include non-transitory computer readable storage medium, such as to practice one or more computer implemented methods described herein. In some embodiments, the non-transitory computer readable storage medium includes algorithm for irradiating a sample having cells in a flow stream, algorithm for measuring light from the irradiated cells with an imaging photodetector, algorithm for measuring autofluorescence spectra generated by the irradiated cells in the sample with a spectral photodetector, algorithm for calculating a cell parameter based on image data generated from the measured light, algorithm for generating one or more population clusters based on the measured autofluorescence spectra and the calculated cell parameter, algorithm for assessing morphological heterogeneity of the cells in each of the population clusters and algorithm for classifying particles of the population clusters based on the assessed morphological heterogeneity.

In some instances, the non-transitory computer readable storage medium includes algorithm for measuring the autofluorescence spectra by the imaging photodetector in an imaging channel of the light detection system. In some instances, the non-transitory computer readable storage medium includes algorithm for measuring the autofluorescence spectra by the spectral photodetector in a spectral channel of the light detection system. In some instances, the non-transitory computer readable storage medium includes algorithm for measuring autofluorescence by one of a plurality of spectral photodetectors and includes algorithm for selecting the one photodetector channel of the plurality of spectral photodetectors based on the spectral profile of the autofluorescence. In some instances, the non-transitory computer readable storage medium includes algorithm for selecting the photodetector channel based on a maximal intensity of the autofluorescence.

In some embodiments, the non-transitory computer readable storage medium includes algorithm for calculating cell parameters based on image data generated from the measured light. In some instances, the non-transitory computer readable storage medium includes algorithm for calculating the cell parameters from data signals generated in an imaging photodetector channel of the light detection system. In some instances, the non-transitory computer readable storage medium includes algorithm for calculating the cell parameters from data signals generated in a plurality of different imaging photodetector channels of the light detection system. In certain instances, the non-transitory computer readable storage medium includes algorithm for calculating at least one cell parameter from data signals generated in spectral photodetector channels of the light detection system. In certain instances, the non-transitory computer readable storage medium includes algorithm for calculating at least one cell parameter from data signals generated in a plurality of spectral photodetector channels of the light detection system. In some instances, the non-transitory computer readable storage medium includes algorithm for calculating one or more image parameters from the image data or a generated image of the cells. In some instances, the non-transitory computer readable storage medium includes algorithm for calculating the cell parameter based on the image parameter. In some instances, the image parameter is a quantitative image parameter. In some instances, the parameter is selected from center of mass, delta center of mass, diffusivity, eccentricity, long axis moment, maximum intensity, radial moment, short axis moment, size, total intensity, light loss by the cell nuclei, forward scattered light by the cell nuclei, side scattered light by the cell nuclei and combinations thereof. In some instances, the non-transitory computer readable storage medium includes algorithm for calculating the image parameter from images generated based on fluorescence measured from the cells, light loss measured for the cells, forward scattered light measured for the cells, side scattered light measured for the cells and combinations thereof.

In embodiments, the non-transitory computer readable storage medium includes algorithm for generating the one or more population clusters by dimensionality reduction. In some instances, the dimensionality reduction includes Uniform Manifold Approximation and Projection (UMAP) or t-distributed stochastic neighbor embedding (t-SNE). In some instances, generating the population clusters includes K-nearest neighbors (KNN) clustering. In some instances, the non-transitory computer readable storage medium includes algorithm for generating the clusters by unsupervised dimensionality reduction. In certain instances, the non-transitory computer readable storage medium includes algorithm for assessing cell populations in the generated clusters with a cluster explorer. In certain instances, the non-transitory computer readable storage medium includes algorithm for backgating unique clusters.

In some embodiments, the non-transitory computer readable storage medium includes algorithm for assessing the morphological heterogeneity of the cells in one or more of the generated population clusters. In some instances, the non-transitory computer readable storage medium includes algorithm for assessing the heterogeneity of the cells in each of the generated population clusters. In some embodiments, the non-transitory computer readable storage medium includes algorithm for assessing the heterogeneity based on one or more of the cell parameters. In some instances, the non-transitory computer readable storage medium includes algorithm for determining the heterogeneity based on observations from images of the cells in the population clusters. In some instances, the non-transitory computer readable storage medium includes algorithm for identifying and gating together cells having different heterogeneity.

In some embodiments, the non-transitory computer readable storage medium includes algorithm for quantifying a change in the cells of the sample. In some instances, the non-transitory computer readable storage medium includes algorithm for assessing the heterogeneity of the cells of the sample by determining that there has been a change in the cells in the sample. In some instances, the non-transitory computer readable storage medium includes algorithm for quantifying the change in the cells by quantifying a change in the autofluorescence spectra of the cells in the sample. In some instances, the non-transitory computer readable storage medium includes algorithm for quantifying the change in the cells by quantifying a change in an image parameter of the cells. In some instances, the non-transitory computer readable storage medium includes algorithm for determining heterogeneity of the cells based on a change in the autofluorescence spectra of the cells. In some instances, the non-transitory computer readable storage medium includes algorithm for determining the heterogeneity of the cells based on a change in autofluorescence intensity measured from the cells. In some instances, the non-transitory computer readable storage medium includes algorithm for determining heterogeneity of the cells based on a change in imaging parameters of one or more population clusters. In certain instances, the change in imaging parameters includes one or more of eccentricity, center of mass and size. In some embodiments, the cells are autotrophic cells, heterotrophic cells, tumor cells, immune cells, bacteria or lineage-labeled cells.

In some embodiments, the non-transitory computer readable storage medium includes algorithm for classifying cells of the sample based on the assessed morphological heterogeneity. In some instances, the non-transitory computer readable storage medium includes algorithm for classifying the cells based on autofluorescence spectra, changes in autofluorescence spectra or autofluorescence intensity. In some instances, the non-transitory computer readable storage medium includes algorithm for classifying the cells based on image parameters, calculated cell parameters or visualized observations from images of the cells. In some instances, one or more population clusters are classified. In certain instances, one or more subset groups from each population clusters are classified.

In some instances, the non-transitory computer readable storage medium includes algorithm for classifying the cells by determining one or more gates for the cells in each of the population clusters of the sample. In some instances, the gates are sorting gates (e.g., for use in generating a sorting decision). In some instances, the one or more sorting gates capture cells of a target particle population cluster and exclude particles of a non-target particle population cluster. In some instances, the sorting gates maximize the inclusion yield of cells of a target particle population cluster. In some instances, the sorting gates maximize the exclusion of cells of a non-target particle population cluster.

### BRIEF DESCRIPTION OF THE FIGURES

The disclosure may be best understood from the following detailed description when read in conjunction with the accompanying drawings. Included in the drawings are the following figures:
**FIG. 1** depicts a flow chart for classifying cells based on assessed morphological heterogeneity according to certain embodiments.
**FIG. 2** presents a flow cytometric system according to certain embodiments.
**FIG. 3A** depicts an image-enabled particle sorter according to certain embodiments. **FIG. 3B** depicts image-enabled particle sorting data processing according to certain embodiments.
**FIG. 4A** depicts a functional block diagram of a particle analysis system according to certain embodiments. **FIG. 4B** depicts a flow cytometer according to certain embodiments.
**FIG. 5** depicts a depicts a functional block diagram for one example of a control system according to certain embodiments.
**FIG. 6A** depicts schematic drawings of a particle sorter system according to certain embodiments. **FIG. 6B** depicts a schematic drawing of a particle sorter system according to certain embodiments.
**FIG. 7** depicts aspects of a computer-controlled system according to certain embodiments.

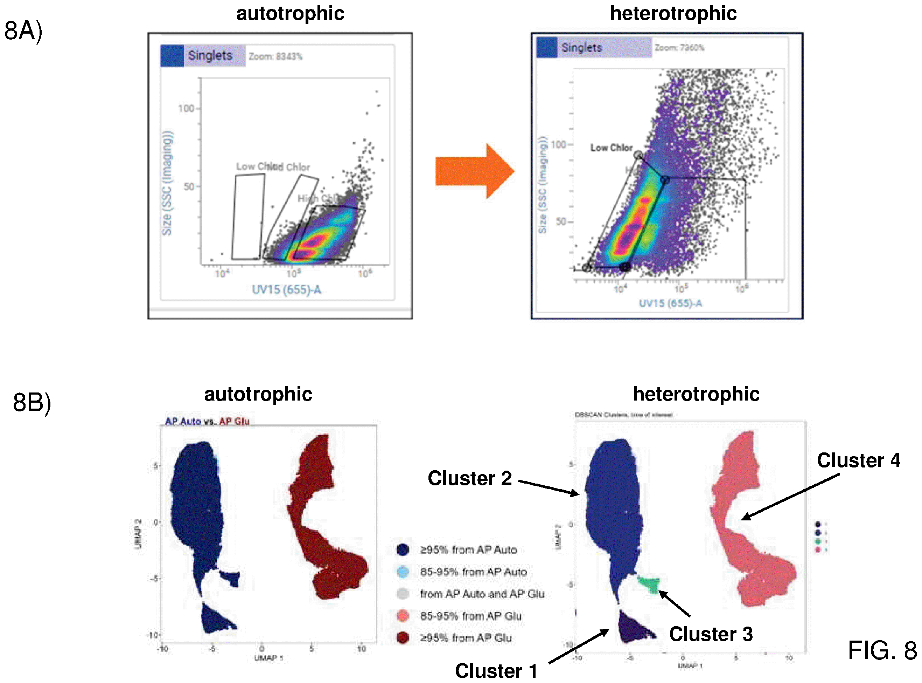

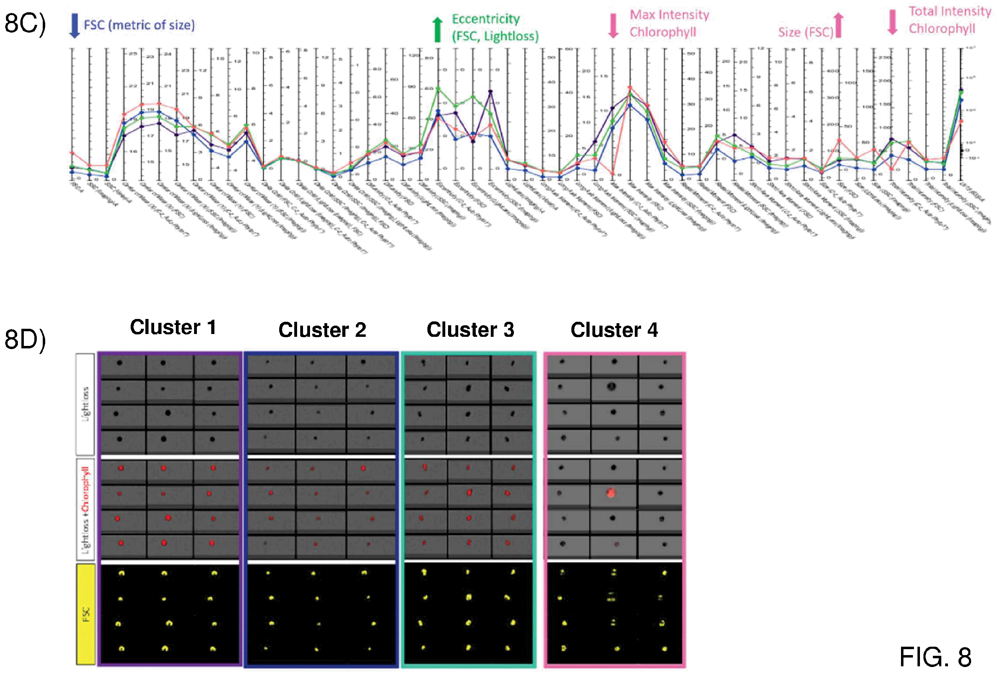

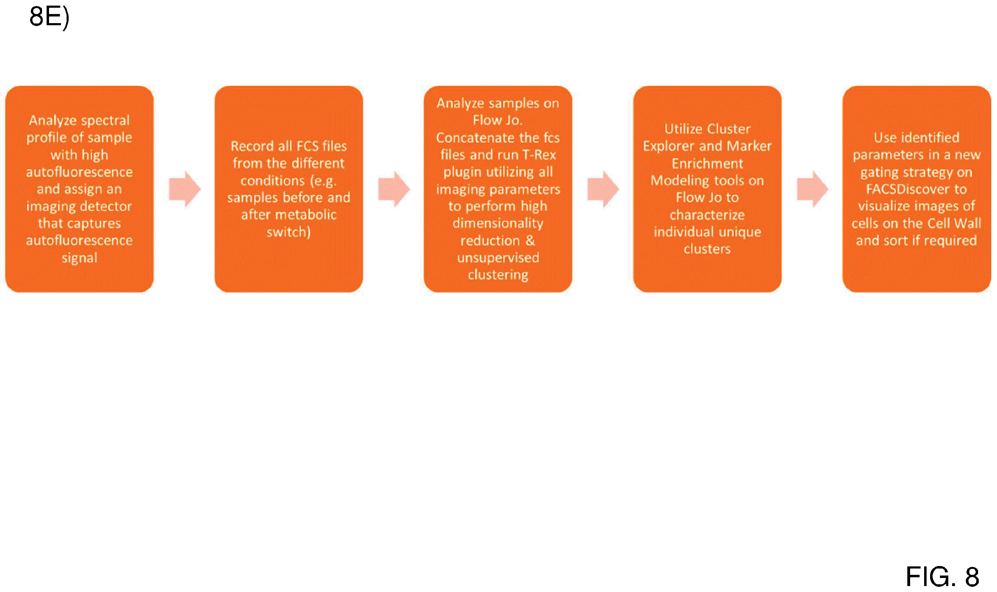

**FIGS. 8A-8E** depict assessing heterogeneity of a sample of autotrophic algae cells according to certain embodiments. **FIG. 8A** depicts a change in the plot of the autofluorescence in autotrophic and heterotrophic cells. **FIG. 8B** depicts assessing intra-sample heterogeneity of autotrophic and heterotrophic cells after clustering of the sample data. **FIG. 8C** depicts a plot of a change in imaging parameters in response to decreased chlorophyll in the heterotrophic algae sample. **FIG. 8D** depicts images of individual cells from the cluster explorer analysis. The visualization of the cells were compared to the analysis by autofluorescence spectral and intensity changes to assess the morphological heterogeneity of the cells in each cluster. **FIG. 8E** provides a flow chart for assessing heterogeneity of a complex sample based on the autofluorescence and assigned imaging parameters according to certain embodiments.

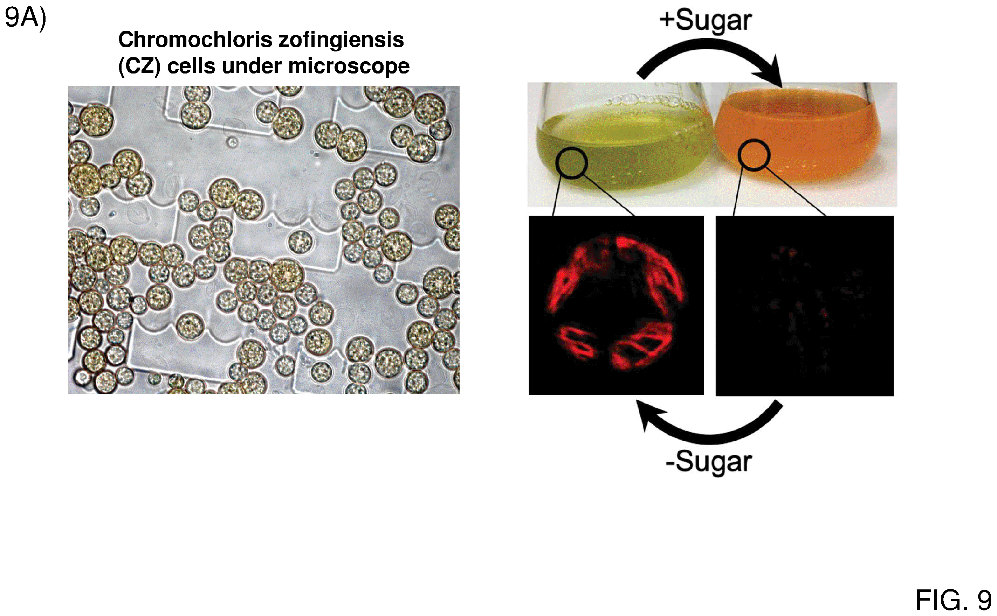

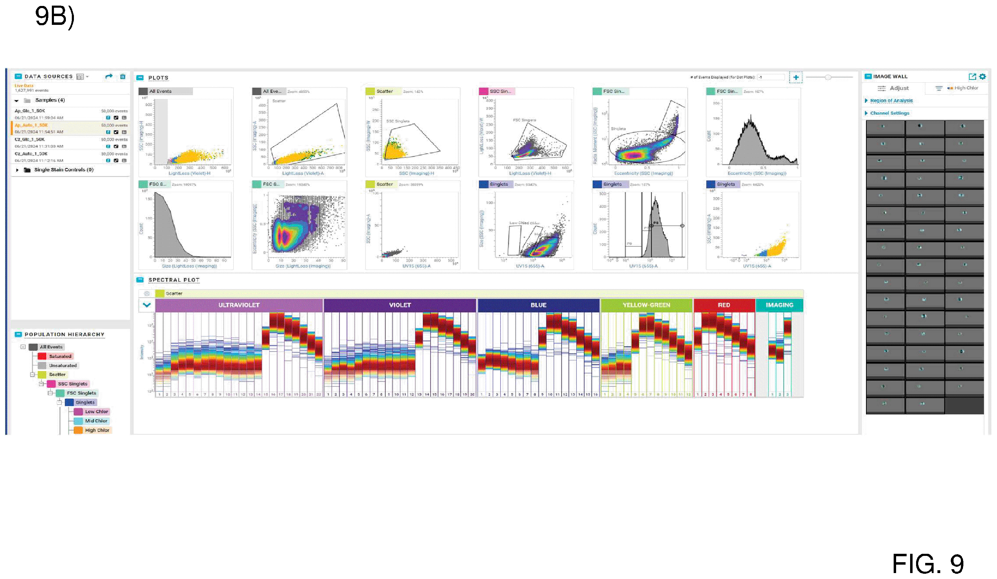

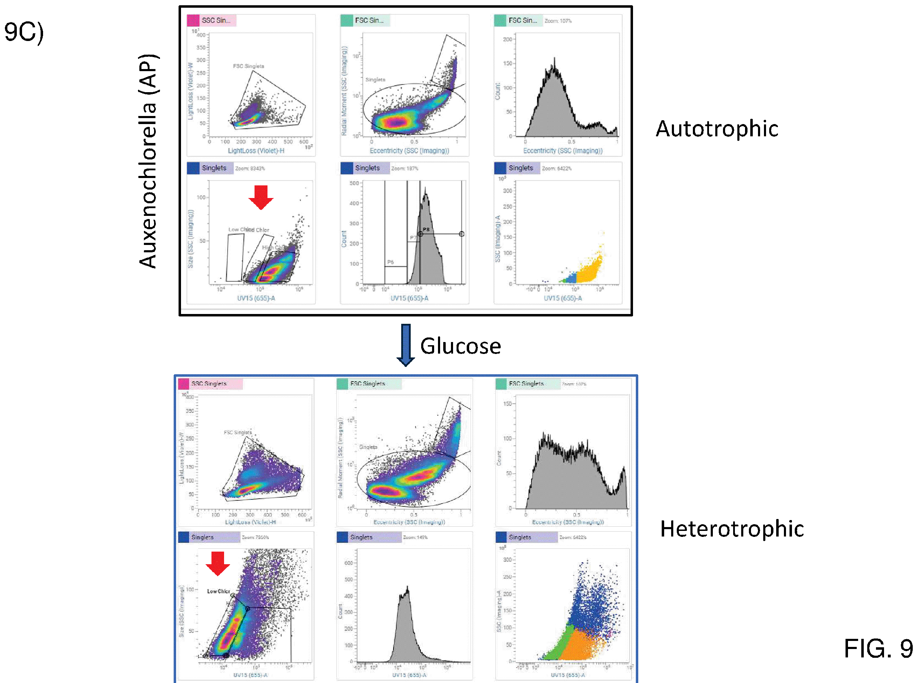

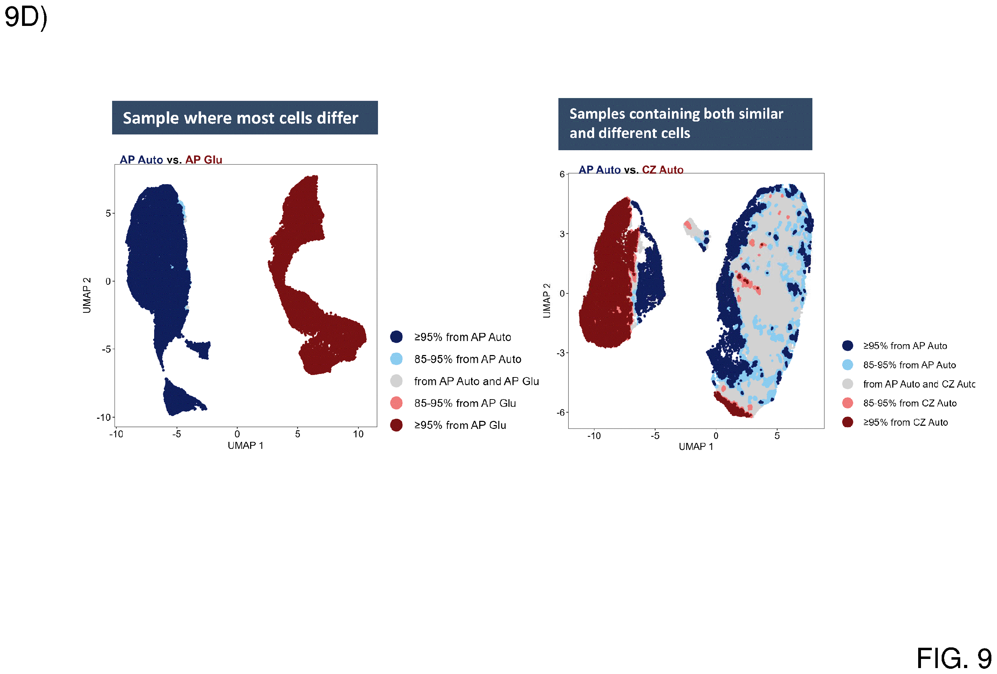

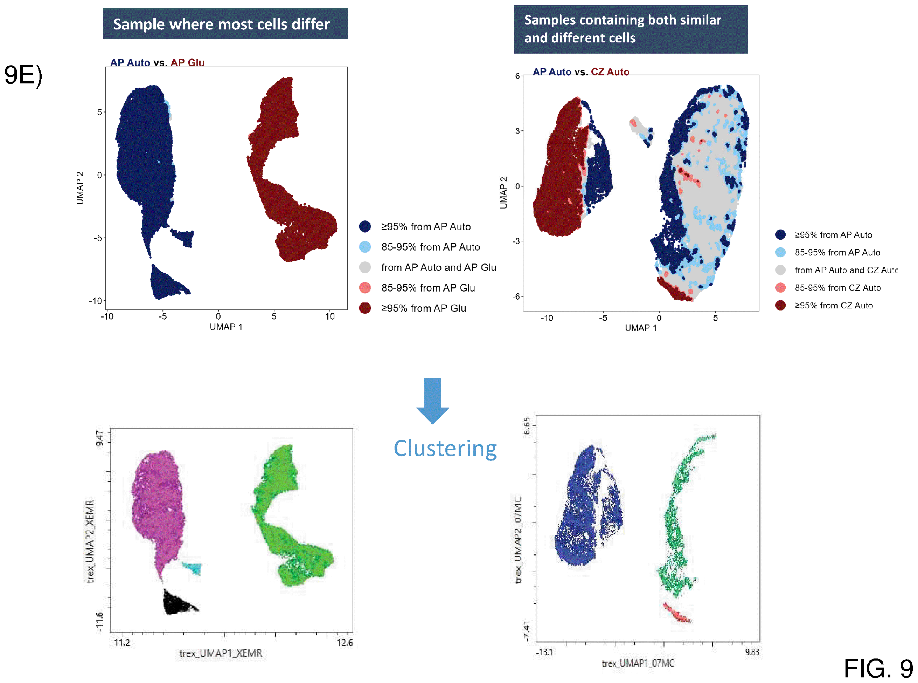

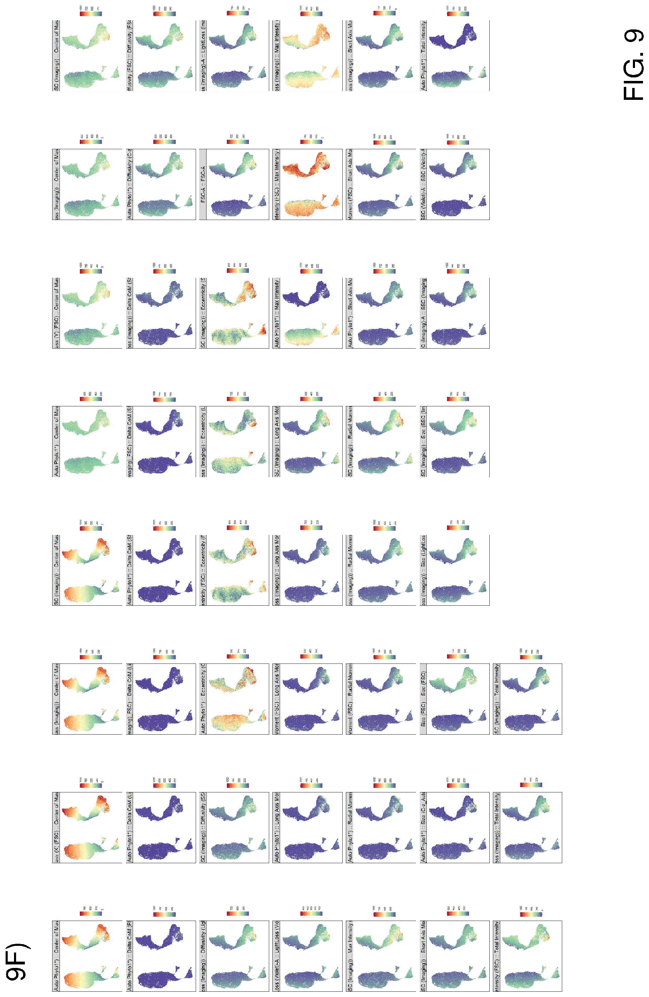

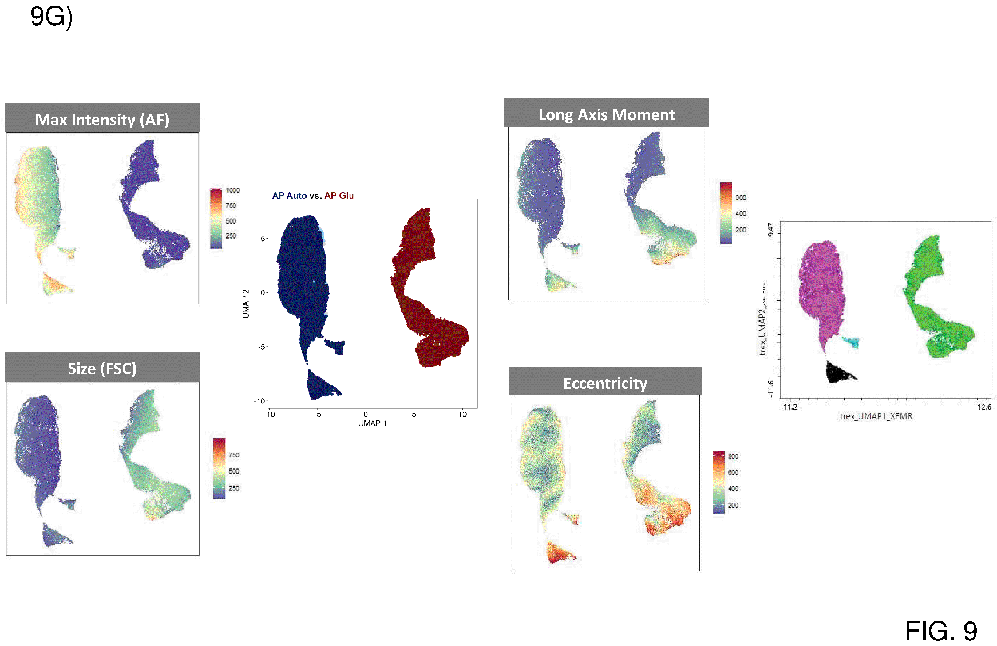

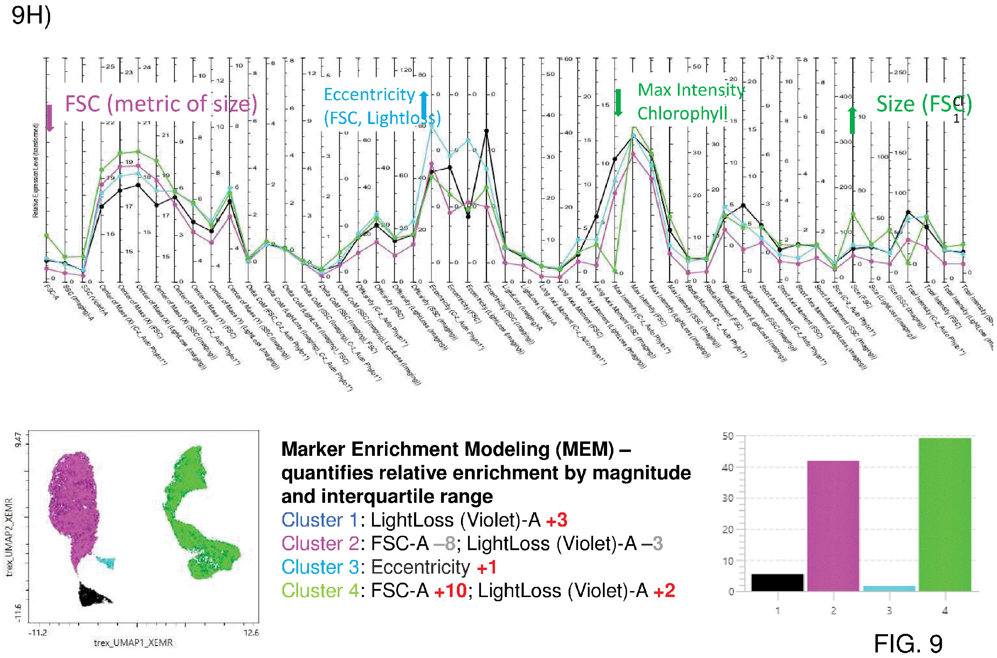

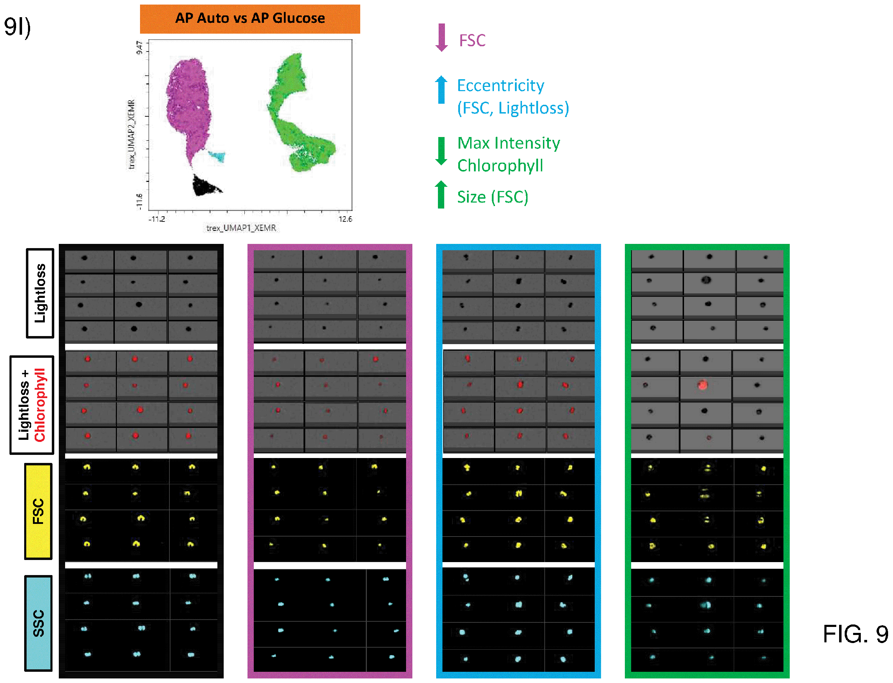

**FIGS. 9A-9I** depict assessing cellular parameters and morphological heterogeneity cells according to certain embodiments. **FIG. 9A** depicts green algae cells under a microscope and color changes to the cell samples according to certain embodiments. **FIG. 9B** depicts analysis of imaging and spectral parameters generated for an autotrophic sample of *Auxenochlorella protothecoides* according to certain embodiments. **FIG. 9C** depicts changes in generated imaging parameters when glucose is added to the autotrophic cells of *Auxenochlorella protothecoides.* **FIG. 9D** depicts analysis by UMAP of the population clusters of an *Auxenochlorella protothecoides* sample and a sample having *Auxenochlorella protothecoides* and *Chromochloris zofingiensis.* **FIG. 9E** depicts clustering of the data from the Auxenochlorella protothecoides and Chromochloris zofingiensis cells by Density-Based Spatial Clustering of Applications with Noise (DBScan) according to certain embodiments. **FIG. 9F** depicts an overview of generated pseudo-colored plots analyzing all spectral and imaging parameters according to certain embodiments. **FIG. 9G** depicts another example of generating cluster populations and assessing heterogeneity within each cluster according to certain embodiments. **FIG. 9H** depicts analysis of autofluorescence and morphology of population clusters according to certain embodiments. **FIG. 9I** depicts visualizing cells using different imaging parameters determined from the cluster analysis according to certain embodiments.

### DETAILED DESCRIPTION

Aspects of the present disclosure include methods for characterizing cellular heterogeneity in complex cell samples by flow cytometry. Methods according to certain embodiments include irradiating a sample having cells in a flow stream with a light source in a flow cytometer, measuring light from the irradiated cells with an imaging photodetector of a light detection system, measuring autofluorescence spectra generated by the irradiated cells in the sample with a spectral photodetector, calculating a cell parameter based on image data generated from the measured light, generating one or more population clusters based on the measured autofluorescence spectra and the calculated cell parameter, assessing morphological heterogeneity of the cells in each of the population clusters and classifying particles of the population clusters based on the assessed morphological heterogeneity. Systems and non-transitory computer-readable storage media configured to carry out the subject methods are also provided.

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope of the present disclosure. Any recited method can be carried out in the order of events recited or in any other order which is logically possible.

While the system and method has or will be described for the sake of grammatical fluidity with functional explanations, it is to be expressly understood that the claims are not to be construed as necessarily limited in any way by the construction of "means" or "steps" limitations, but are to be accorded the full scope of the meaning and equivalents of the definition provided by the claims.

### METHODS FOR CHARACTERIZING CELLULAR HETEROGENEITY IN COMPLEX CELL SAMPLES

Aspects of the present disclosure include methods for characterizing cellular heterogeneity in complex cell samples by flow cytometry. As discussed above, autofluorescence is generally viewed as being a major challenge because autofluorescence obscures signals from specific fluorescent markers and can vary between cell types and under different conditions. In embodiments of the present disclosure, the subject methods provide for assessing morphological heterogeneity of cells of a sample, such as a complex sample which exhibits high autofluorescence. In some instances, methods include accurately identifying different sample populations by leveraging the autofluorescence spectra and imaging data from the cells of the sample. In some instances, cells of a sample are classified by quantifying a change in the autofluorescence spectra and cell parameters.

In certain embodiments, the subject methods provide for an optimized classification of cell populations of a complex sample such as where gating of populations captures a target population by 75% or more, such as by 80% or more, such as by 85% or more, such as by 90% or more, such as by 95% or more, such as by 97% or more and including by 99% or more. In certain instances, the subject methods increases the precision of classification gates by 2-fold or more, such as by 3-fold or more, such as by 4-fold or more, such as by 5- fold or more and including by 10-fold or more. In some embodiments, the subject methods increase sort decision accuracy by 5% or more, such as by 10% or more, such as by 25% or more, such as by 50% or more, such as by 75% or more, such as by 90% or more and including by 99% or more. In certain instances, the subject methods increase sort decision accuracy by 2-fold or more, such as by 3-fold or more, such as by 4-fold or more, such as by 5- fold or more and including by 10-fold or more.

Studying cellular heterogeneity is crucial for understanding disease mechanisms, for example in cancer, where diverse cell populations can lead to drug resistance. Cell heterogeneity measurements enable the development of personalized medicine by modifying treatments to a patient's disease. Determining cell heterogeneity also reveals how the biology of different cell types emerge and function and aids in drug development by identifying new targets and understanding cell susceptibility to drugs. In plants, understanding cellular heterogeneity is essential for understanding how different cell types contribute to development, adaptation to environmental changes, and responses to biotic and abiotic stresses.

Currently, researchers study cellular and phenotypic heterogeneity using various advanced methods. Imaging techniques, such as fluorescence microscopy, enable the visualization of cellular structures, but are incompatible with downstream molecular analysis and are prone to researcher bias. Flow cytometry measures physical and proteomic characteristics of cells to identify and/or sort different phenotypic populations. Single-cell RNA sequencing (scRNA-seq) can then be performed to provide insights into gene expression profiles that correlate with specific phenotypes.

However, in some cases, analyzing samples with high autofluorescence through cytometry is difficult, because the natural fluorescence from cells can obscure the signals from specific fluorescent markers. The varying autofluorescence between cell types and conditions often leads to inaccurate cytometric measurements and data misinterpretation.

As such, the methods and systems provided herein measure and employ both fluorescence (spectral) and imaging signals to assess cellular morphological heterogeneity and classify clusters of cells. This combination merges spectral flow cytometry with real-time spatial and morphological insights, utilizing imaging parameters and raw fluorescence data. This approach facilitates new biological discoveries in challenging samples with high autofluorescence, such as green algae.

The term "analyte data" is used herein in its conventional sense to refer to data obtained by assessing a particular analyte for certain characteristics. In some embodiments, the analyte data is spectral data. The term spectral data is used herein in its conventional sense to refer to data signals which extend across one or more predetermined wavelength ranges. The spectral data signals may be generated by light measured by the photodetector at one or more different wavelengths, such as at 2 or more different wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light from particles in the flow stream at 400 or more different wavelengths. In certain instances, light from the sample is spectrally separated into 2 or more spectral ranges and each spectral range is detected in one or more photodetector channels, such as 3 or more spectral ranges, such as 4 or more, such as 8 or more, such as 16 or more, such as 32 or more, such as 64 or more, such as 128 or more, such as 256 or more and including 512 or more different spectral ranges. As such, the data signals that are generated are in response to light that have spectral ranges of 1 nm or more, such as 2 nm or more, such as 5 nm or more, such as 10 nm or more, such as 25 nm or more, such as 50 nm or more, such as 100 nm or more, such as 150 nm or more, such as 200 nm or more and including spectral ranges of light of 250 nm or more. In some embodiments, each spectral data signal may be generated in 1 or more spectral photodetector channels, such as 2 or more, such as 3 or more, such as 4 or more, such as 8 or more, such as 12 or more, such as 16 or more, such as 32 or and including in 64 or more different spectral photodetector channels. In some embodiments, spectral data may be generated in 1 or more imaging photodetector channels, such as 2 or more, such as 3 or more, such as 4 or more, such as 8 or more, such as 12 or more, such as 16 or more, such as 32 or and including in 64 or more different imaging photodetector channels.

In some cases, the analyte data is flow cytometer data. By "flow cytometer data" is meant information regarding the characteristics of sample particles that has been collected by any number of detectors in a particle analyzer. As discussed herein, a "particle analyzer" is an analytical tool (e.g., flow cytometer) that enables the characterization of particles on the basis of certain (e.g., optical) parameters. By "particle", it is meant a discrete component of a biological sample such as a molecule, analyte-bound bead, individual cell, or the like. While the present disclosure is primarily described in terms of flow cytometer data, the applicability of the disclosure is not limited to flow cytometer data. In certain cases, the present disclosure may be applicable to other types of data, such as nucleic acid data.

Flow cytometer data may be received from any suitable source. In some embodiments, flow cytometer data is received from the memory of a storage device. In such embodiments, flow cytometer data may have been previously generated and saved in the memory of the storage device for subsequent recall and analysis. In other embodiments, the flow cytometer data is received in real time. Put another way, flow cytometer data generated during the operation of a flow cytometer may subsequently (e.g., immediately) populate the data-space (e.g., two-dimensional plot). In embodiments, the flow cytometer data is received from a forward scatter detector. A forward scatter detector may, in some instances, yield information regarding the overall size of a particle. In embodiments, the flow cytometer data is received from a side scatter detector. A side scatter detector may, in some instances, be configured to detect refracted and reflected light from the surfaces and internal structures of the particle, which tends to increase with increasing particle complexity of structure.

In practicing the subject methods, a sample having particles (e.g., cells in a flow stream) is irradiated with light from a light source. As described in greater detail below, in certain instances the cells of the sample exhibit a change which can be detected and measured in accordance with the methods described herein in a manner sufficient to assess the morphological heterogeneity of the cells in the sample. In some instances, the cells are autotrophic cells, heterotrophic cells, tumor cells, immune cells, bacteria or lineage-labeled cells.

In some embodiments, the light source is a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Where methods include irradiating with a broadband light source, broadband light source protocols of interest may include, but are not limited to, a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof.

In other embodiments, methods includes irradiating with a narrow band light source emitting a particular wavelength or a narrow range of wavelengths, such as for example with a light source which emits light in a narrow range of wavelengths like a range of 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Where methods include irradiating with a narrow band light source, narrow band light source protocols of interest may include, but are not limited to, a narrow wavelength LED, laser diode or a broadband light source coupled to one or more optical bandpass filters, diffraction gratings, monochromators or any combination thereof.

In certain embodiments, methods include irradiating the sample with one or more lasers. As discussed above, the type and number of lasers will vary depending on the sample as well as desired light collected and may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In others instances, the methods include irradiating the flow stream with a dye laser, such as a stilbene, coumarin or rhodamine laser. In yet other instances, methods include irradiating the flow stream with a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, methods include irradiating the flow stream with a solid-state laser, such as a ruby laser, an Nd:YAG laser, NdCrYAG laser, Er:YAG laser, Nd:YLF laser, Nd:YVO₄ laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The sample may be irradiated with one or more of the above-mentioned light sources, such as 2 or more light sources, such as 3 or more light sources, such as 4 or more light sources, such as 5 or more light sources and including 10 or more light sources. The light source may include any combination of types of light sources. For example, in some embodiments, the methods include irradiating the sample in the flow stream with an array of lasers, such as an array having one or more gas lasers, one or more dye lasers and one or more solid-state lasers.

The sample may be irradiated with wavelengths ranging from 200 nm to 1500 nm, such as from 250 nm to 1250 nm, such as from 300 nm to 1000 nm, such as from 350 nm to 900 nm and including from 400 nm to 800 nm. For example, where the light source is a broadband light source, the sample may be irradiated with wavelengths from 200 nm to 900 nm. In other instances, where the light source includes a plurality of narrow band light sources, the sample may be irradiated with specific wavelengths in the range from 200 nm to 900 nm. For example, the light source may be plurality of narrow band LEDs (1 nm - 25 nm) each independently emitting light having a range of wavelengths between 200 nm to 900 nm. In other embodiments, the narrow band light source includes one or more lasers (such as a laser array) and the sample is irradiated with specific wavelengths ranging from 200 nm to 700 nm, such as with a laser array having gas lasers, excimer lasers, dye lasers, metal vapor lasers and solid-state laser as described above.

Where more than one light source is employed, the sample may be irradiated with the light sources simultaneously or sequentially, or a combination thereof. For example, the sample may be simultaneously irradiated with each of the light sources. In other embodiments, the flow stream is sequentially irradiated with each of the light sources. Where more than one light source is employed to irradiate the sample sequentially, the time each light source irradiates the sample may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the sample with the light source (e.g. laser) for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where sample is sequentially irradiated with two or more light sources, the duration sample is irradiated by each light source may be the same or different.

The time period between irradiation by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each light source is 10 microseconds. In embodiments where sample is sequentially irradiated by more than two (i.e., 3 or more) light sources, the delay between irradiation by each light source may be the same or different.

The sample may be irradiated continuously or in discrete intervals. In some instances, methods include irradiating the sample in the sample with the light source continuously. In other instances, the sample in is irradiated with the light source in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the light source, the sample may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In certain embodiments, methods include irradiating the sample with two or more beams of frequency shifted light. As described above, a light beam generator component may be employed having a laser and an acousto-optic device for frequency shifting the laser light. In these embodiments, methods include irradiating the acousto-optic device with the laser. Depending on the desired wavelengths of light produced in the output laser beam (e.g., for use in irradiating a sample in a flow stream), the laser may have a specific wavelength that varies from 200 nm to 1500 nm, such as from 250 nm to 1250 nm, such as from 300 nm to 1000 nm, such as from 350 nm to 900 nm and including from 400 nm to 800 nm. The acousto-optic device may be irradiated with one or more lasers, such as 2 or more lasers, such as 3 or more lasers, such as 4 or more lasers, such as 5 or more lasers and including 10 or more lasers. The lasers may include any combination of types of lasers. For example, in some embodiments, the methods include irradiating the acousto-optic device with an array of lasers, such as an array having one or more gas lasers, one or more dye lasers and one or more solid-state lasers.

Where more than one laser is employed, the acousto-optic device may be irradiated with the lasers simultaneously or sequentially, or a combination thereof. For example, the acousto-optic device may be simultaneously irradiated with each of the lasers. In other embodiments, the acousto-optic device is sequentially irradiated with each of the lasers. Where more than one laser is employed to irradiate the acousto-optic device sequentially, the time each laser irradiates the acousto-optic device may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the acousto-optic device with the laser for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where the acousto-optic device is sequentially irradiated with two or more lasers, the duration the acousto-optic device is irradiated by each laser may be the same or different.

The time period between irradiation by each laser may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each laser is 10 microseconds. In embodiments where the acousto-optic device is sequentially irradiated by more than two (i.e., 3 or more) lasers, the delay between irradiation by each laser may be the same or different.

The acousto-optic device may be irradiated continuously or in discrete intervals. In some instances, methods include irradiating the acousto-optic device with the laser continuously. In other instances, the acousto-optic device is irradiated with the laser in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the laser, the acousto-optic device may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In some embodiments, methods include applying radiofrequency drive signals to the acousto-optic device to generate angularly deflected laser beams. Two or more radiofrequency drive signals may be applied to the acousto-optic device to generate an output laser beam with the desired number of angularly deflected laser beams, such as 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including 100 or more radiofrequency drive signals.

The angularly deflected laser beams produced by the radiofrequency drive signals each have an intensity based on the amplitude of the applied radiofrequency drive signal. In some embodiments, methods include applying radiofrequency drive signals having amplitudes sufficient to produce angularly deflected laser beams with a desired intensity. In some instances, each applied radiofrequency drive signal independently has an amplitude from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. In some instances, each applied radiofrequency drive signal independently has an amplitude from about 0.001 V to 100 V, such as from about 0.001 V to 200 V, such as from 0.001 V to 300 V, such as from 0.001 V to 400 V and including from 0.001 V to 500 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz. Each applied radiofrequency drive signal has, in some embodiments, a frequency of from about 0.001 MHz to about 100 MHz, such as from 0.001 MHz to 200 MHz, such as from 0.001 MHz to 300 MHz, such as from 0.001 MHz to 400 MHz, such as from 0.001 MHz to 500 MHz.

In these embodiments, the angularly deflected laser beams in the output laser beam are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, the angularly deflected laser beams overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, the flow stream is irradiated with a plurality of beams of frequency-shifted light and particles in the flow stream are imaged such as described in Diebold, et al. Nature Photonics Vol. 7(10); 806-810 (2013), as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

In practicing the subject methods, light from each particle is detected by a light detection system. In embodiments, light detection systems include one or more photodetectors, such as 2 or more, such as 3 or more, such as 4 or more, such as 5 or more, such as 6 or more, such as 7 or more, such as 8 or more, such as 9 or more and including 10 or more photodetectors. Photodetectors for practicing the subject methods may be any convenient light detecting protocol, including but not limited to photosensors or photodetectors, such as avalanche photodiodes (APDs), active-pixel sensors (APSs), quadrant photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In certain embodiments, the photodetector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

In some embodiments, the light detection system includes imaging photodetectors and spectral photodetectors. In some instances, light may be detected in 1 or more imaging photodetector channels, such as in 2 or more imaging photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including 512 or more imaging photodetector channels. In some instances, light may be detected in 1 or more spectral photodetector channels, such as in 2 or more spectral photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including 512 or more spectral photodetector channels.

Light may be measured by the photodetector at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light from particles in the flow stream at 400 or more different wavelengths. Light may be measured continuously or in discrete intervals. In some instances, detectors of interest are configured to take measurements of the light continuously. In other instances, detectors of interest are configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

In certain embodiments, light detected from the sample is scattered light. The term "scattered light" is used herein in its conventional sense to refer to the propagation of light energy from particles in the sample (e.g., flowing in a flow stream) that are deflected from the incident beam path, such as by reflection, refraction or deflection of the beam of light. In certain instances, scattered light detected from the particles in the flow stream is forward scattered light (FSC). In other instances, scattered light detected from the particles in the flow stream is side scattered light (SSC). In yet other instances, scattered light detected from the particles in the flow stream is backscattered light (BSC).

In embodiments, autofluorescence is measured from the irradiated cells of the sample by the photodetectors of the light detection system. In some embodiments, the autofluorescence spectra that are generated by the irradiated cells are measured. In some embodiments, the intensity of the autofluorescence from the irradiated cells is measured. The term "autofluorescence" is used herein in its conventional sense to refer to the emission of light from structures or components of the particle (e.g., cellular components within a cell) when irradiated by a light source. The autofluorescence does not come from and is distinct from added fluorescent markers. In some instances, the particles are cells and autofluorescence from the cells include light emission from autofluorescencing molecules such as chlorophyll, NADPH, flavins, proteins and amino acids such as tryptophan, tyrosine and phenyalanine. In certain instances, autofluorescence from cells include light emission from intrinsic properties of collagen or elastin. The autofluorescence of the particle may differ, in some instances, depending on the state of the cell, such as where the cell is unstimulated, stimulated, activated or some other biological or physical state.

In some embodiments, light detected from each particle is emitted light, such as particle luminescence (i.e., fluorescence or phosphorescence). In some embodiments, each particle may include one or more fluorophores which emits fluorescence in response to irradiation by the two or more light sources. For example, each particle may include 2 or more fluorophores, such as 3 or more, such as 4 or more, such as 5 or more, such as 6 or more, such as 7 or more, such as 8 or more, such as 9 or more and including 10 or more fluorophores. In some instances, each particle includes a fluorophore which emits fluorescence in response to irradiation by the light source. In some embodiments, fluorophores of interest may include but are not limited to dyes suitable for use in analytical applications (e.g., flow cytometry, imaging, etc.) , such as an acridine dye, anthraquinone dyes, arylmethane dyes, diarylmethane dyes (e.g., diphenyl methane dyes), chlorophyll containing dyes, triarylmethane dyes (e.g., triphenylmethane dyes), azo dyes, diazonium dyes, nitro dyes, nitroso dyes, phthalocyanine dyes, cyanine dyes, asymmetric cyanine dyes, quinon-imine dyes, azine dyes, eurhodin dyes, safranin dyes, indamins, indophenol dyes, fluorine dyes, oxazine dye, oxazone dyes, thiazine dyes, thiazole dyes, xanthene dyes, fluorene dyes, pyronin dyes, fluorine dyes, rhodamine dyes, phenanthridine dyes, as well as dyes combining two or more of the aforementioned dyes (e.g., in tandem), polymeric dyes having one or more monomeric dye units and mixtures of two or more of the aforementioned dyes thereof. A large number of dyes are commercially available from a variety of sources, such as, for example, Molecular Probes (Eugene, OR), Dyomics GmbH (Jena, Germany), Sigma-Aldrich (St. Louis, MO), Sirigen, Inc. (Santa Barbara, CA), Becton Dickinson (BD) and Company (Franklin Lakes, NJ) and Exciton (Dayton, OH). For example, the fluorophore may include 4-acetamido-4'-isothiocyanatostilbene-2,2'disulfonic acid; acridine and derivatives such as acridine, acridine orange, acridine yellow, acridine red, and acridine isothiocyanate; allophycocyanin (APC), phycoerythrin (PE), peridinin-chlorophyll protein, 5-(2'-aminoethyl)aminonaphthalene-1-sulfonic acid (EDANS); 4-amino-N-[3-vinylsulfonyl)phenyl]naphthalimide-3,5 disulfonate (Lucifer Yellow VS); N-(4-anilino-1-naphthyl)maleimide; anthranilamide; Brilliant Yellow; coumarin and derivatives such as coumarin, 7-amino-4-methylcoumarin (AMC, Coumarin 120), 7-amino-4-trifluoromethylcouluarin (Coumaran 151); cyanine and derivatives such as cyanosine, Cy3, Cy3.5, Cy5, Cy5.5, and Cy7; 4',6-diaminidino-2-phenylindole (DAPI); 5', 5"-dibromopyrogallol-sulfonephthalein (Bromopyrogallol Red); 7-diethylamino-3-(4'-isothiocyanatophenyl)-4-methylcoumarin; diethylaminocoumarin; diethylenetriamine pentaacetate; 4,4'-diisothiocyanatodihydro-stilbene-2,2'-disulfonic acid; 4,4'-diisothiocyanatostilbene-2,2'-disulfonic acid; 5-[dimethylamino]naphthalene-1-sulfonyl chloride (DNS, dansyl chloride); 4-(4'-dimethylaminophenylazo)benzoic acid (DABCYL); 4-dimethylaminophenylazophenyl-4'-isothiocyanate (DABITC); eosin and derivatives such as eosin and eosin isothiocyanate; erythrosin and derivatives such as erythrosin B and erythrosin isothiocyanate; ethidium; fluorescein and derivatives such as 5-carboxyfluorescein (FAM), 5-(4,6-dichlorotriazin-2-yl)aminofluorescein (DTAF), 2'7'-dimethoxy-4'5'-dichloro-6-carboxyfluorescein (JOE), fluorescein isothiocyanate (FITC), fluorescein chlorotriazinyl, naphthofluorescein, and QFITC (XRITC); fluorescamine; IR144; IR1446; Green Fluorescent Protein (GFP); Reef Coral Fluorescent Protein (RCFP); Lissamine^{™}; Lissamine rhodamine, Lucifer yellow; Malachite Green isothiocyanate; 4-methylumbelliferone; ortho cresolphthalein; nitrotyrosine; pararosaniline; Nile Red; Oregon Green; Phenol Red; B-phycoerythrin; o-phthaldialdehyde; pyrene and derivatives such as pyrene, pyrene butyrate and succinimidyl 1-pyrene butyrate; Reactive Red 4 (Cibacron^{™} Brilliant Red 3B-A); rhodamine and derivatives such as 6-carboxy-X-rhodamine (ROX), 6-carboxyrhodamine (R6G), 4,7-dichlororhodamine lissamine, rhodamine B sulfonyl chloride, rhodamine (Rhod), rhodamine B, rhodamine 123, rhodamine X isothiocyanate, sulforhodamine B, sulforhodamine 101, sulfonyl chloride derivative of sulforhodamine 101 (Texas Red), N,N,N',N'-tetramethyl-6-carboxyrhodamine (TAMRA), tetramethyl rhodamine, and tetramethyl rhodamine isothiocyanate (TRITC); riboflavin; rosolic acid and terbium chelate derivatives; xanthene; dye-conjugated polymers (i.e., polymer-attached dyes) such as fluorescein isothiocyanate-dextran as well as dyes combining two or more dyes (e.g., tandem dyes or protein complex tandem dyes) such as phycoerythrin (PE) tandem dyes or allophycocyanin (APC) tandem dyes, for example phycoerythrin-CF594 (PE-CF594) tandem, phycoerythrin-cyanine 5 tandem (PE-Cy5), phycoerythrin-cyanine 5.5 tandem (PE-Cy5.5), phycoerythrin-cyanine 7 tandem (PE-Cy7), allophycocyanin-R700 tandem (APC-R700), allophycocyanin-cyanine 7 (APC-Cy7), polymeric dyes having one or more monomeric dye units and mixtures of two or more of the aforementioned dyes or combinations thereof.

In some instances, the fluorophore (i.e., dye) is a fluorescent polymeric dye. Fluorescent polymeric dyes that find use in the subject methods and systems are varied. In some instances of the method, the polymeric dye includes a conjugated polymer. Conjugated polymers (CPs) are characterized by a delocalized electronic structure which includes a backbone of alternating unsaturated bonds (e.g., double and/or triple bonds) and saturated (e.g., single bonds) bonds, where π-electrons can move from one bond to the other. As such, the conjugated backbone may impart an extended linear structure on the polymeric dye, with limited bond angles between repeat units of the polymer. For example, proteins and nucleic acids, although also polymeric, in some cases do not form extended-rod structures but rather fold into higher-order three-dimensional shapes. In addition, CPs may form "rigid-rod" polymer backbones and experience a limited twist (e.g., torsion) angle between monomer repeat units along the polymer backbone chain. In some instances, the polymeric dye includes a CP that has a rigid rod structure. As summarized above, the structural characteristics of the polymeric dyes can have an effect on the fluorescence properties of the molecules.

Any convenient polymeric dye may be utilized in the subject methods and systems. In some instances, a polymeric dye is a multichromophore that has a structure capable of harvesting light to amplify the fluorescent output of a fluorophore. In some instances, the polymeric dye is capable of harvesting light and efficiently converting it to emitted light at a longer wavelength. In some cases, the polymeric dye has a light-harvesting multichromophore system that can efficiently transfer energy to nearby luminescent species (e.g., a "signaling chromophore"). Mechanisms for energy transfer include, for example, resonant energy transfer (e.g., Forster (or fluorescence) resonance energy transfer, FRET), quantum charge exchange (Dexter energy transfer) and the like. In some instances, these energy transfer mechanisms are relatively short range; that is, close proximity of the light harvesting multichromophore system to the signaling chromophore provides for efficient energy transfer. Under conditions for efficient energy transfer, amplification of the emission from the signaling chromophore occurs when the number of individual chromophores in the light harvesting multichromophore system is large; that is, the emission from the signaling chromophore is more intense when the incident light (the "excitation light") is at a wavelength which is absorbed by the light harvesting multichromophore system than when the signaling chromophore is directly excited by the pump light.

The multichromophore may be a conjugated polymer. Conjugated polymers (CPs) are characterized by a delocalized electronic structure and can be used as highly responsive optical reporters for chemical and biological targets. Because the effective conjugation length is substantially shorter than the length of the polymer chain, the backbone contains a large number of conjugated segments in close proximity. Thus, conjugated polymers are efficient for light harvesting and enable optical amplification via energy transfer.

In some instances, the polymer may be used as a direct fluorescent reporter, for example fluorescent polymers having high extinction coefficients, high brightness, etc. In some instances, the polymer may be used as a strong chromophore where the color or optical density is used as an indicator.

Polymeric dyes of interest include, but are not limited to, those dyes described by Gaylord et al. in US Publication Nos. 20040142344, 20080293164, 20080064042, 20100136702, 20110256549, 20120028828, 20120252986, 20130190193 and 20160025735 and Gaylord et al., J. Am. Chem. Soc., 2001, 123 (26), pp 6417-6418; Feng et al., Chem. Soc. Rev., 2010,39, 2411-2419; and Traina et al., J. Am. Chem. Soc., 2011, 133 (32), pp 12600-12607.

In practicing the subject methods according to certain embodiments spectral data signals are generated from measured autofluorescence of the cells of the sample. In some instances, the generated spectral data signals are summed across a plurality of photodetector channels, such as where the spectral data signal are a sum of the data signals across 2 or more photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including 512 or more photodetector channels. In other embodiments, the generated spectral data signals are taken from a single photodetector channel. In some instances, the single photodetector channel is a predetermined photodetector channel, such as the photodetector channel where the autofluorescence exhibits peak fluorescence. In some instances, the single photodetector channel is the photodetector channel which exhibits maximum autofluorescence signal intensity. In other embodiments, the generated spectral data signals are summed across a plurality of photodetector channels which exceed a predetermined intensity threshold, such as where each of the plurality of photodetector channels exceeds the predetermined intensity threshold by 1% or more, such as by 5% or more, such as by 10% or more and including by 25% or more. In some instances, the generated spectral data signals are summed across a plurality of photodetector channels which exceed a predetermined signal-to-noise ratio, such as where each of the plurality of photodetector channels exceeds the predetermined signal-to-noise ratio by 1% or more, such as by 5% or more, such as by 10% or more and including by 25% or more. In some embodiments, the autofluorescence spectra are measured in one or more spectral photodetector channels. In some embodiments, the autofluorescence spectra are measured in one or more imaging photodetector channels.

In some embodiments, the autofluorescence spectra are measured by the imaging photodetector in an imaging channel of the light detection system. In some instances, the autofluorescence spectra are measured by the spectral photodetector in a spectral channel. In some instances, measuring the autofluorescence is performed by one of a plurality of spectral photodetectors and methods further include selecting the one photodetector channel of the plurality of spectral photodetectors. In some embodiments, methods include selecting the autofluorescence spectra to the photodetector channel based on a maximal intensity of the autofluorescence. For example, the autofluorescence spectra may be measured in 2 or more spectral photodetector channels, such as 4 or more, such as 8 or more, such as 12 or more, such as 16 or more, such as 32 or more, such as 64 or more, such as 128 or more and including in 256 or more spectral photodetector channels and selecting the spectral photodetector channel based on the maximal intensity of the autofluorescence. In some instances, the autofluorescence spectra may be measured in 2 or more imaging photodetector channels, such as 3 or more, such as 4 or more, such as 5 or more, such as 6 or more, such as 7 or more, such as 8 or more, such as 9 or more, such as 10 or more, such as 15 or more, such as 20 or more, such as 25 or more and including in 50 or more imaging photodetector channels and methods include selecting the imaging photodetector channel based on a maximal intensity of the autofluorescence.

In some embodiments, image data is generated in one or more imaging photodetector channels in response to light measured from the irradiated cells of the sample. In some embodiments, the image data includes one or more waveforms generated in response to the measured light. In some instances, an image is generated of the cell from the image data. In some instances, methods include calculating an image parameter based on one or more of the image data and the image of the cell. In some instances, the cell parameters are calculated from data signals generated in an imaging photodetector channel of the light detection system. In some instances, the cell parameters are calculated from data signals generated in a plurality of different imaging photodetector channels of the light detection system. In certain instances, at least one cell parameter is calculated from data signals generated in spectral photodetector channels of the light detection system. In certain instances, at least one cell parameter is calculated from data signals generated in a plurality of spectral photodetector channels of the light detection system.

In some instances, methods include calculating one or more image parameters from the image data or a generated image of the cells. In some instances, the cell parameter is calculated based on the image parameter. In some instances, the image parameter is a quantitative image parameter. In certain embodiments, one or more image parameters are calculated from the generated images of the cells. In some instances, a center of mass image parameter is calculated from the generated image. In some instances, a delta center of mass image parameter is calculated from the generated image. In some instances, a diffusivity image parameter is calculated from the generated image. In some instances, an eccentricity image parameter is calculated from the generated image. In some instances, a long axis moment image parameter is calculated from the generated image. In some instances, a maximum intensity image parameter is calculated from the generated image. In some instances, a radial moment image parameter is calculated from the generated image. In some instances, a short axis moment image parameter is calculated from the generated image. In some instances, a particle size image parameter is calculated from the generated image. In some instances, a total intensity image parameter is calculated from the generated image. In some instances, a particle light loss image parameter is calculated from the generated image. In some instances, a forward scattered light image parameter is calculated from the generated image. In some instances, a side scattered light image parameter is calculated from the generated image. In some instances, an image moment is calculated from the generated image. The term "image moment" is used herein in its conventional sense to refer to a weighted average of pixel intensities in an image. In some instances, the center of mass may be calculated from the image moment of the image. In other instances, the orientation of the cell may be calculated from the image moment of the image. In still other instances, the eccentricity of the cell may be calculated from the image moment of the image.

In certain embodiments, imaging parameters calculated from the image data or a generated image of the cells are summarized in Table 1.

**Table 1**

| | Imaging parameters |
|---|---|
| 1 | FSC-A :: FSC-A |
| 2 | FSC-H :: FSC-H |
| 3 | FSC-T :: FSC-T |
| 4 | FSC-W :: FSC-W |
| 5 | SSC (Imaging)-A :: SSC (Imaging)-A |
| 6 | SSC (Imaging)-H :: SSC (Imaging)-H |
| 7 | SSC (Imaging)-T :: SSC (Imaging)-T |
| 8 | SSC (Imaging)-W :: SSC (Imaging)-W |
| 9 | SSC (Violet)-A :: SSC (Violet)-A |
| 10 | SSC (Violet)-H :: SSC (Violet)-H |
| 11 | SSC (Violet)-T :: SSC (Violet)-T |
| 12 | SSC (Violet)-W :: SSC (Violet)-W |
| 13 | Center of Mass (X) (FSC) |
| 14 | Center of Mass (X) (LightLoss (Imaging)) |
| 15 | Center of Mass (X) (SSC (Imaging)) |
| 16 | Center of Mass (Y) (FSC) |
| 17 | Center of Mass (Y) (LightLoss (Imaging)) |
| 18 | Center of Mass (Y) (SSC (Imaging)) |
| 19 | Delta CoM (LightLoss (Imaging)_FSC) |
| 20 | Delta CoM (SSC (Imaging)_FSC) |
| 21 | Delta CoM (SSC (Imaging)_LightLoss (Imaging)) |
| 22 | Diffusivity (FSC) |
| 23 | Diffusivity (LightLoss (Imaging)) |
| 24 | Diffusivity (SSC (Imaging)) |
| 25 | Eccentricity (FSC) |
| 26 | Eccentricity (LightLoss (Imaging)) |
| 27 | Eccentricity (SSC (Imaging)) |
| 28 | LightLoss (Imaging)-A :: LightLoss (Imaging)-A |
| 29 | LightLoss (Imaging)-H :: LightLoss (Imaging)-H |
| 30 | LightLoss (Imaging)-T :: LightLoss (Imaging)-T |
| 31 | LightLoss (Imaging)-W :: LightLoss (Imaging)-W |
| 32 | LightLoss (Violet)-A :: LightLoss (Violet)-A |
| 33 | LightLoss (Violet)-H :: LightLoss (Violet)-H |
| 34 | LightLoss (Violet)-T :: LightLoss (Violet)-T |
| 35 | LightLoss (Violet)-W :: LightLoss (Violet)-W |
| 36 | Long Axis Moment (FSC) |
| 37 | Long Axis Moment (LightLoss (Imaging)) |
| 38 | Long Axis Moment (SSC (Imaging)) |
| 39 | Max Intensity (FSC) |
| 40 | Max Intensity (LightLoss (Imaging)) |
| 41 | Max Intensity (SSC (Imaging)) |
| 42 | Radial Moment (FSC) |
| 43 | Radial Moment (LightLoss (Imaging)) |
| 44 | Radial Moment (SSC (Imaging)) |
| 45 | Short Axis Moment (FSC) |
| 46 | Short Axis Moment (LightLoss (Imaging)) |
| 47 | Short Axis Moment (SSC (Imaging)) |
| 48 | Size (FSC) |
| 49 | Size (LightLoss (Imaging)) |
| 50 | Size (SSC (Imaging)) |
| 51 | Total Intensity (FSC) |
| 52 | Total Intensity (LightLoss (Imaging)) |
| 53 | Total Intensity (SSC (Imaging)) |

In embodiments, methods include generating population clusters based on the measured autofluorescence spectra and calculated cell parameters. Methods include generating 2 or more population clusters, such as 3 or more clusters, 4 or more clusters, 5 or more clusters, 6 or more clusters, 7 or more clusters, 8 or more clusters, 9 or more clusters, and including 10 or more clusters. In embodiments, data is comprised of signals from any given number of different parameters, such as, for instance 2 or more, 3 or more, 4 or more, 5 or more, 6 or more, 7 or more, 8 or more, 9 or more, 10 or more, and including 20 or more. A cluster may be defined in a subset of the dimensions, e.g., with respect to a subset of the measured parameters, which corresponds to populations that differ in only a subset of the measured parameters or features extracted from the measurements of the cells.

In some embodiments, the population clusters are generated by dimensionality reduction. In some instances, the clusters are generated by unsupervised dimensionality reduction. In some instances, the dimensionality reduction includes Uniform Manifold Approximation and Projection (UMAP), t-distributed stochastic neighbor embedding (t-SNE) or principal component analysis (PCA), Non-negative matrix factorization (NMF), Linear discriminant analysis (LDA), Generalized discriminant analysis (GDA). In some instances, generating the population clusters includes K-nearest neighbors (KNN) clustering. In some instances, clustering includes a density-based spatial clustering of applications with noise (DBSCAN) algorithm. DBSCAN groups together data points by density, with points having a higher density forming a cluster. Details regarding DBSCAN may be found in, e.g., Ester et al. (1996) Proceedings of the Second International Conference on Knowledge Discovery and Data. 96(34):226-231. In still other instances, clustering includes a balanced iterative reducing and clustering using hierarchies (BIRCH) algorithm. BIRCH is an unsupervised data mining algorithm used for hierarchical clustering. Details regarding BIRCH may be found in, e.g., Zhang et al. (1996) ACM sigmod record. 25(2): 103-114. In certain implementations, BIRCH may be employed to supplement one or more of the other algorithms discussed herein. For example, in some embodiments, BIRCH is used to accelerate K-means clustering. In further embodiments, BIRCH is used to accelerate Gaussian mixture modeling. In yet other cases, clustering includes a K-means clustering algorithm. K-means clustering involves partitioning observations into clusters in which each observation belongs to the cluster with the nearest mean (e.g., centroid). Details regarding K-means clustering may be found in, e.g., Lloyd, Stuart P. (1967) IEEE Transactions on Information Theory. 28(2): 129-137. In further cases, clustering includes a spectral clustering algorithm. Spectral clustering involves the use of eigenvalues of a similarity matrix. Details regarding spectral clustering may be found in, e.g., Von Luxburg, U. (2007) Statistics and computing 17: 395-416.

In some cases, methods include clustering multiple sets of analyte data, such as 2 or more sets, 3 or more sets, 4 or more sets, 5 or more sets, 7 or more sets, 8 or more sets, 9 or more sets, and including 10 or more sets. In such cases, sets may be from the same source or from different sources. The number of data points (e.g., events, observations) clustered by the subject methods may also vary. In some cases, the number of data points ranges from 1k to 100k, such as 10k to 80k, such as 20k to 60k and including 25k to 50k. In some embodiments, the number of data points is 1k or more, such as 5k or more, such as 10k or more, such as 15k or more, such as 20k or more, such as 25k or more, such as 30k or more, such as 35k or more, such as 40k or more, such as 45k or more, such as 50k or more, such as 55k or more, such as 60k or more, such as 65k or more, such as 70k or more, such as 75k or more, such as 80k or more, such as 85k or more, such as 90k or more, such as 95k or more and including 100k or more.

In some embodiments, clustering is based on an analyte feature. In some instances, the analyte feature is one or more of a size feature, imaging feature, a scatter feature, or any combination thereof. In some cases, the initial set of analyte features includes from 5 to 20 analyte features (e.g., 9 to 11 analyte features). In certain versions, the analyte features include from 2 to 10 analyte features (e.g., 2 to 4 analyte features). In certain versions, clustering the analyte data includes including 90% or more (e.g., 97% or more) of analyte data associated with the cluster criterion in a cluster associated with the cluster criterion. In some cases, clustering the analyte data excludes 85% or more (e.g., 92% or more) of analyte data not associated with the cluster criterion from a cluster associated with the cluster criterion.

Following the clustering of the analyte data, methods according to some versions may include assessing the morphological heterogeneity of the cells of the sample. In some instances, methods include assessing the heterogeneity of the cells in each of the generated population clusters. In some embodiments, the heterogeneity is assessed based on one or more of the cell parameters. In some instances, the heterogeneity is assessed based on observations from images of the cells in the population clusters. In some instances, cells having different heterogeneity are identified and gated together. In some embodiments, assessing the heterogeneity includes comparing the cluster population data to ground truth data. In embodiments, methods include receiving data, calculating parameters of each analyte, and clustering together analytes based on the calculated parameters. For example, where the data is flow cytometer data, an experiment may include particles labeled by several fluorophores or fluorescently labeled antibodies, and groups of particles may be defined by populations corresponding to one or more fluorescent measurements. In the example, a first group may be defined by a certain range of light scattering for a first fluorophore, and a second group may be defined by a certain range of light scattering for a second fluorophore. If the first and second fluorophores are represented on an x and y axis, respectively, two different color-coded populations might appear to define each group of particles, if the information was to be graphically displayed. Any number of analytes may be assigned to a cluster, including 5 or more analytes, such as 10 or more analytes, such as 50 or more analytes, such as 100 or more analytes, such as 500 analytes and including 1000 analytes. In certain embodiments, the method groups together in a cluster rare events (e.g., rare cells in a sample, such as cancer cells) detected in the sample. In these embodiments, the analyte clusters generated may include 10 or fewer assigned analytes, such as 9 or fewer and including 5 or fewer assigned analytes.

In some instances, assessing the morphological heterogeneity of the cells of the sample include quantifying a change in the physical or metabolic state of the cells, such as where the cells are unstimulated, stimulated, activated, change from autotrophic to heterotrophic or some other biological or physical state. In some instances, assessing heterogeneity includes quantifying a change in the autofluorescence spectra of the cells of one or more population clusters. For example, the change in autofluorescence spectra may include a change in the peak emission of the autofluorescence, a bathochromic shift or a hyposochromic shift. In some instances, assessing heterogeneity includes quantifying a change in the autofluorescence intensity of the cells of one or more population clusters. For example, when autotrophic cells change to heterotrophic cells upon the addition of glucose, the heterotrophic cells in a population cluster may exhibit a decrease in autofluorescence intensity. In some instances, assessing heterogeneity includes quantifying a change in one or more imaging parameters of the cells of a particular population cluster. In some instances, methods include determining that there is a change in a center of mass image parameter for cells of one or more of the population clusters. In some instances, methods include determining that there is a change in a delta center of mass image parameter. In some instances, methods include determining that there is a change in a diffusivity image parameter. In some instances, methods include determining that there is a change in an eccentricity image parameter. In some instances, methods include determining that there is a change in a long axis moment image parameter. In some instances, methods include determining that there is a change in a maximum intensity image parameter. In some instances, methods include determining that there is a change in a radial moment image parameter. In some instances, methods include determining that there is a change in a short axis moment image parameter. In some instances, methods include determining that there is a change in a particle size image parameter. In some instances, methods include determining that there is a change in a total intensity image parameter. In some instances, methods include determining that there is a change in a particle light loss image parameter. In some instances, methods include determining that there is a change in a forward scattered light image parameter. In some instances, methods include determining that there is a change in a side scattered light image parameter. In some instances, methods include determining that there is a change in an image moment. The term "image moment" is used herein in its conventional sense to refer to a weighted average of pixel intensities in an image. In some instances, the center of mass may be calculated from the image moment of the image. In other instances, the orientation of the cell may be calculated from the image moment of the image. In still other instances, the eccentricity of the cell may be calculated from the image moment of the image. In certain instances, methods include determining that there is a change in an eccentricity parameter. In certain instances, methods include determining that there is a change in a center of mass parameter. In certain instances, methods include determining that there is a change in a size parameter.

In some embodiments, methods include classifying the cells based on the assessed heterogeneity, the calculated image parameters, autofluorescence or a combination thereof. In some embodiments, cells of the sample are classified by a machine learning algorithm that uses reference images of the cells, autofluorescence spectral data or one or more reference image parameters as training data sets. In some instances, the machine learning algorithm is a dynamic algorithm that updates based on generated images and determined image parameters of the cells. Any convenient machine learning algorithm can be implemented where machine learning algorithms of interest can include, but are not limited to a linear regression algorithm, a logistic regression algorithm, a Naïve Bayes algorithm, a k-nearest neighbor (kNN) algorithm, a Random forest algorithm, decision tree algorithm, a support vector machine algorithm, a gradient boosting algorithm and a clustering algorithm. In certain embodiments, the machine learning algorithm is a neural network. In some instances, the machine learning algorithm is a neural network such as an artificial neural network, a convolutional neural network or a recurrent neural network. In certain instances, the machine learning algorithm is a python script.

In some embodiments, methods include determining one or more sorting gates for the classified cells of the sample. The term "gate" is used herein in its conventional sense to refer to a classifier boundary identifying a subset of data of interest. In some instances, a gate can bound a group of events of particular interest. In addition, "gating" may refer to the process of classifying the data using a defined gate for a given set of data, where the gate can be one or more regions of interest combined with Boolean logic. In some embodiments, a gate identifies particles exhibiting the same image parameters. Examples of methods for gating have been described in, for example, U.S. Pat. Nos. 4,845,653; 5,627,040; 5,739,000; 5,795,727; 5,962,238; 6,014,904; 6,944,338; and 8,990,047. In some embodiments, the gate bounds a particle population cluster from one or more different samples that has previously been determined (e.g., by a user), to correspond to properties of interest. In some instances, each of the gates is calculated from the imaging parameters used to assessed the heterogeneity of each population cluster.

In some instances, the one or more sorting gates capture cells of a target particle population cluster and exclude particles of a non-target particle population cluster. In some instances, the sorting gates maximize the inclusion yield of cells of a target particle population cluster. some instances, the sorting gates are configured to maximize the inclusion yield of a target particle population cluster, such as where the sorting gates are configured to generate an inclusion yield of cells of a target particle population cluster of 50% or more, such as 55% or more, such as 60% or more, such as 65% or more, such as 70% or more, such as 75% or more, such as 80% or more, such as 85% or more, such as 90% or more, such as 95% or more, such as 97% or more, such as 99% or more and including determining a sorting gate that is configured to generate an inclusion yield of cells of a target particle population cluster of 99.9% or more. In some instances, the sorting gates are configured to maximize the purity yield of cells of a target particle population cluster, such as where the sorting gates are configured to generate a purity yield of cells of a target particle population cluster of 50% or more, such as 55% or more, such as 60% or more, such as 65% or more, such as 70% or more, such as 75% or more, such as 80% or more, such as 85% or more, such as 90% or more, such as 95% or more, such as 97% or more, such as 99% or more and including determining a sorting gate that is configured to generate a purity yield of cells of target particle population cluster of 99.9% or more.

In some instances, the sorting gates are configured to maximize the exclusion of particles of a non-target particle population. In some instances, the sorting gates are configured to exclude 50% or more of particles of non-target particle populations, such as 55% or more, such as 60% or more, such as 65% or more, such as 70% or more, such as 75% or more, such as 80% or more, such as 85% or more, such as 90% or more, such as 95% or more, such as 97% or more, such as 99% or more and including determining a sorting gate that is configured to exclude 99.9% or more of particles of a non-target particle population cluster. In some instances, the sorting gates exclude particles of a non-target particle population cluster based on a calculated Mahalanobis distance from a target particle population cluster.

In certain embodiments, generating the sorting gates includes an Fβ score, where the Fβ score is a weighted harmonic mean of the inclusion of particles of a target particle population cluster and the exclusion of particles of a non-target particle population cluster. The beta (β) parameter of the Fβ score will bias the gating strategy toward either yield (e.g., increased inclusion of target particles) or purity (e.g., increased exclusion of non-target particles) of the sample. For example, where the Fβ score is equal to 1, the purity and yield have equal contributions to the gating strategy. Where the Fβ score is equal to 2, the gating strategy emphasizes yield over purity. Where the Fβ score is equal to 0.5, the gating strategy will emphasize purity over yield. In some embodiments, the Fβ score ranges from 0.1 to 10, such as from 0.2 to 9.5, such as from 0.3 to 9, such as from 0.4 to 8.5, such as from 0.5 to 8, such as from 0.5 to 7, such as from 0.5 to 6, such as from 0.5 to 5, such as from 0.5 to 4, such as from 0.5 to 3, such as from 0.5 to 2. In some instances, the generated sorting gates of interest have an Fβ score of 1 or more. In some instances, the generated sorting gates have an Fβ score of less than 1.

In some instances, methods include assessing the sorting gates of the gating strategy and adjusting one or more of the generated sorting gates. The adjustment may be made based on a metric indicating the accuracy of the sorting gates according to the desired sorting strategy. In some instances, the metric may be an accuracy (e.g., purity) metric where the purity is compared to a predetermined threshold. The metric may be generated based on a confidence of the classifiers included in the sort strategy. In other instances, the metric may be a yield metric where the yield of target cells of a particle population cluster is compared to a predetermined threshold.

In some embodiments, methods include generating a sorting decision based on the determined sorting gates for the cells of the sample. In some instances, generating a particle sorting decision according to the present disclosure includes a gating strategy of 8 sorting gates or less, such as 7 sorting gates or less, such as 6 sorting gates or less, such as 5 sorting gates or less, such as 4 sorting gates or less, such as 3 sorting gates or less and including 2 sorting gates or less. In some embodiments, methods include generating sorting gates using a graphical display that displays one or more analysis algorithms for applying the classification parameters to the image parameters determined for the cells.

In some embodiments, methods include displaying the gating strategy on the graphical user interface. For example, the analysis algorithm may be one or more of a spectral compensation matrix, a clustering algorithm and a t-Distributed Stochastic Neighbor Embedding (t-SNE) algorithm. In some instances, the analysis algorithm is applied to the particle population cluster by dragging an icon of the analysis algorithm onto the particle population cluster. In other instances, the particle population cluster is selected and the analysis algorithm is applied by selecting from a drop-down menu. In certain instances, the analysis algorithm is a spectral unmixing algorithm, such as described in U.S. Patent No. 11,009,400 and International Patent Application No. PCT/US2021/46741 filed on August 19, 2021. In some instances, the gating strategy is determined using computational sorting algorithms such as described with in U.S. Patent No. 11,513,054. In certain instances, the sorting gates may be determined using computer software such as HyperFinder (e.g., as described in Bonavia, et al. Frontiers in Immunology 2022; 13: 1007016) and Computational Sorting with HyperFinder, FlowJo Software and BD FACSDiva Software (Becton Dickinson, 2021. In certain embodiments, the gating strategy is developed on a separate computational system (e.g., a different computer system or network) and communicated to a flow cytometer for implementing the gating strategy, such as for example using a particle sorter (e.g., having a sort decision module) of the flow cytometer.

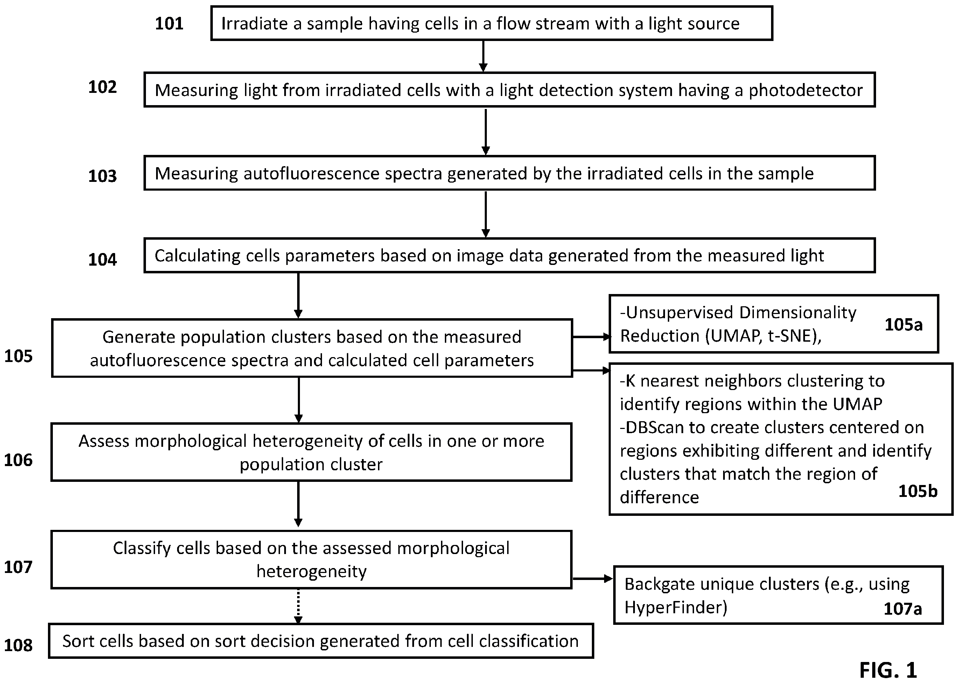

Figure 1 depicts a flow chart for classifying cells based on assessed morphological heterogeneity according to certain embodiments. At step 101, a sample of cells are irradiated in a flow stream with light source. In some instances, the sample is irradiated in a flow stream of a flow cytometer. Light is measured from the irradiated cells with a light detection system having a photodetector at step 102. Autofluorescence spectra (including quantifying autofluorescence intensity) is measured from the irradiated cells at step 103. The autofluorescence spectra can be assigned at this stage to one or more imaging photodetector channels or in a spectral photodetector channel. At step 104, one or more imaging parameters are calculated from image data generated from the measured light. The analyte data, using the autofluorescence and imaging data are clustered into population clusters at step 105. In some instances, clustering performed by unsupervised dimensionality reduction such as with UMAP of t-SNE (step 105a) as well as with K-nearest neighbors clustering or DBScan (step 105b). Heterogeneity of the cells of the population clusters is assessed using a cluster explorer at step 106. Each of the unique clusters is assessed and characterized by the autofluorescence data and the calculated imaging parameters. The cells are classified based on the assessed heterogeneity and the parameters can be used to generate a gating strategy for classifying the cells of each population cluster. (step 107). In some instances, the cells are visualized (e.g., on a cell wall) and images of the cells are used to confirm the morphological assessment of the cells. The unique clusters may be backgated based on the assessment of the heterogeneity (step 107a) In some embodiments, cells of one or more population clusters are sorted at step 108.

In some instances, the sample being analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, autotrophic cells, heterotrophic cells, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T-cell populations, tumor cells or hematopoietic progenitor cells (CD34+) from whole blood, bone marrow or cord blood.

In practicing the subject methods according to certain embodiments, an amount of an initial fluidic sample is injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

In some embodiments, methods include counting and optionally sorting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In certain embodiments, methods include irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In embodiments of the method, detectors, such as photomultiplier tubes (PMT), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in certain embodiments also include data acquisition, analysis and recording, such as with a computer, wherein multiple data channels record data from each detector for the light scatter and fluorescence emitted by each particle as it passes through the sample interrogation region of the particle sorting module. In these embodiments, analysis includes classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

### SYSTEMS

Aspects of the present disclosure also include systems for practicing the subject methods. Systems according to certain embodiments include a light source configured to irradiate cells of a sample with light in a flow stream, a light detection system comprising an imaging photodetector and a spectral photodetector for measuring light from the irradiated cells and a processor having memory operably coupled to the processor where the memory includes instructions stored thereon, which when executed by the processor, cause the processor to measure autofluorescence spectra generated by the cells in the sample with the spectral photodetector, calculate a cell parameter based on image data generated from the measured light, generate one or more population clusters based on the measured autofluorescence spectra and the calculated cell parameter, assess morphological heterogeneity of the cells in each of the population clusters and classify particles of the population clusters based on the assessed morphological heterogeneity.

Systems according to certain embodiments include a light source configured to irradiate the cells of the sample. In embodiments, the light source may be any suitable broadband or narrow band source of light. Depending on the components in the sample (e.g., cells, beads, non-cellular particles, etc.), the light source may be configured to emit wavelengths of light that vary, ranging from 200 nm to 1500 nm, such as from 250 nm to 1250 nm, such as from 300 nm to 1000 nm, such as from 350 nm to 900 nm and including from 400 nm to 800 nm. For example, the light source may include a broadband light source emitting light having wavelengths from 200 nm to 900 nm. In other instances, the light source includes a narrow band light source emitting a wavelength ranging from 200 nm to 900 nm. For example, the light source may be a narrow band LED (1 nm - 25 nm) emitting light having a wavelength ranging between 200 nm to 900 nm. In certain embodiments, the light source is a laser. In some instances, the subject systems include a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject systems include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject systems include a solid-state laser, such as a ruby laser, an Nd:YAG laser, NdCrYAG laser, Er:YAG laser, Nd:YLF laser, Nd:YVO₄ laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof.

In other embodiments, the light source is a non-laser light source, such as a lamp, including but not limited to a halogen lamp, deuterium arc lamp, xenon arc lamp, a light-emitting diode, such as a broadband LED with continuous spectrum, superluminescent emitting diode, semiconductor light emitting diode, wide spectrum LED white light source, an multi-LED integrated. In some instances, the non-laser light source is a stabilized fiber-coupled broadband light source, white light source, among other light sources or any combination thereof.

The light source may be positioned any suitable distance from the sample (e.g., the flow stream in a flow cytometer), such as at a distance of 0.001 mm or more from the flow stream, such as 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source irradiate the sample at any suitable angle (e.g., relative the vertical axis of the flow stream), such as at an angle ranging from 10° to 90°, such as from 15° to 85°, such as from 20° to 80°, such as from 25° to 75° and including from 30° to 60°, for example at a 90° angle.

The light source may be configured to irradiate the sample continuously or in discrete intervals. In some instances, systems include a light source that is configured to irradiate the sample continuously, such as with a continuous wave laser that continuously irradiates the flow stream at the interrogation point in a flow cytometer. In other instances, systems of interest include a light source that is configured to irradiate the sample at discrete intervals, such as every 0.001 milliseconds, every 0.01 milliseconds, every 0.1 milliseconds, every 1 millisecond, every 10 milliseconds, every 100 milliseconds and including every 1000 milliseconds, or some other interval. Where the light source is configured to irradiate the sample at discrete intervals, systems may include one or more additional components to provide for intermittent irradiation of the sample with the light source. For example, the subject systems in these embodiments may include one or more laser beam choppers, manually or computer controlled beam stops for blocking and exposing the sample to the light source.

In some embodiments, the light source is a laser. Lasers of interest may include pulsed lasers or continuous wave lasers. For example, the laser may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO₄ laser, Nd:yCa₄0(BO₃)₃ laser, Nd:YCOB laser, titanium sapphire laser, thulim YAG laser, ytterbium YAG laser, ytterbium₂O₃ laser or cerium doped lasers and combinations thereof; a semiconductor diode laser, optically pumped semiconductor laser (OPSL), or a frequency doubled- or frequency tripled implementation of any of the above mentioned lasers.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example lasers in light beam generators of interest may be a gas laser, such as a helium-neon laser, argon laser, krypton laser, xenon laser, nitrogen laser, CO2 laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO4 laser, Nd:yCa4O(BO3)3 laser, Nd:YCOB laser, titanium sapphire laser, thulim YAG laser, ytterbium YAG laser, ytterbium2O3 laser or cerium doped lasers and combinations thereof.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, they may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, light beam generators configured to generate two or more beams of frequency shifted light include laser excitation modules as described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

In embodiments, systems include a light detection system having a photodetector configured to detect light emitted by the irradiated particles. In some embodiments, the light detection system is configured to detect scattered light. In some instances, the light detection system includes a side-scattered light detector. In some instances, the light detection system includes a forward-scattered light detector. In other embodiments, the light detection system includes multiple scattered light detectors, such as 2 or more, such as 3 or more, such as 4 or more, and including 5 or more. In some embodiments, the subject light detection system also includes a fluorescent light detector configured to detect one or more fluorescent wavelengths of light. In other embodiments, the light detection system includes multiple fluorescent light detectors such as 2 or more, such as 3 or more, such as 4 or more, 5 or more, 10 or more, 15 or more, and including 20 or more.

Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

Where the subject systems include multiple fluorescent light detectors, each fluorescent light detector may be the same, or the collection of fluorescent light detectors may be a combination of different types of detectors. For example, where the subject systems include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, flow cytometers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

In some embodiments, the light detection system includes imaging photodetectors and spectral photodetectors. In some instances, systems are configured to detect the light from the irradiated particles in the flow stream in one or more imaging photodetector channels, such as in 2 or more imaging photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including 512 or more imaging photodetector channels. In some instances, systems are configured to detect the light from the irradiated particles in the flow stream in 1 or more spectral photodetector channels, such as in 2 or more spectral photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including 512 or more spectral photodetector channels.

In certain embodiments, the light detection systems described herein are part of a flow cytometer. Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838.

In some embodiments, the flow cytometer includes a flow cell. Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. In some embodiments, cuvettes are formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -50 µm to 50 µm, such as -25 µm to 40 µm, and including -15 µm to 30 µm. Depending on certain considerations (e.g., the number and arrangement of lasers), multiple irradiation points may exist within the flow cells.

In some embodiments, the flow cell includes, or is configured for use with, a sample injection port configured to provide a sample to the flow cell. In embodiments, the sample injection system is configured to provide suitable flow of sample to the flow cell inner chamber (i.e., flow channel). Depending on the desired characteristics of the flow stream, the rate of sample conveyed to the flow cell chamber by the sample injection port may be1 µL/min or more, such as 2 µL/min or more, such as 3 µL/min or more, such as 5 µL/min or more, such as 10 µL/min or more, such as 15 µL/min or more, such as 25 µL/min or more, such as 50 µL/min or more and including 100 µL/min or more, where in some instances the rate of sample conveyed to the flow cell chamber by the sample injection port is 1µL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more and including 100 µL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

In some embodiments, the flow cell also includes a sheath fluid injection port configured to provide a sheath fluid to the flow cell. In embodiments, the sheath fluid injection system is configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

In some embodiments, the sheath fluid injection port is an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In some embodiments, systems include or are operationally coupled to a flow cytometer. Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter, BD Biosciences FACSDiscover^{™} cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

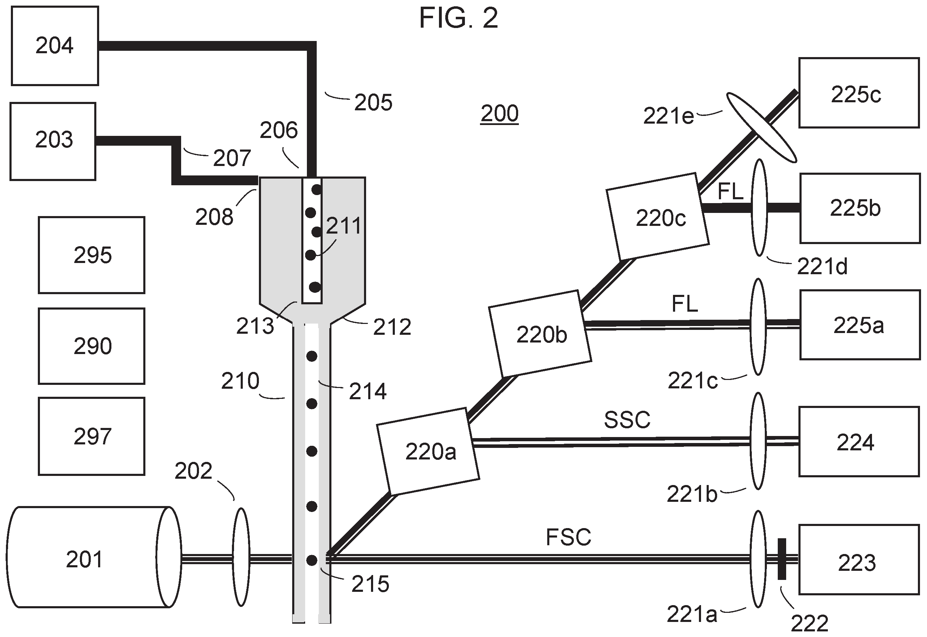

**FIG. 2** shows a system 200 for flow cytometry in accordance with an illustrative embodiment of the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2****,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in **FIG. 2****,** but can include any flow cytometer known in the art. For example, a flow cytometer may have any number of lasers, beam splitters, filters, and detectors at various wavelengths and in various different configurations. For example, while the embodiment of **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017. In certain embodiments, particles (e.g., cells) of the sample are sorted using a sort decision module having a plurality of sort decision units, such as those described in U.S. Patent Publication No. 2020/0256781, filed on December 23, 2019. In some embodiments, systems for sorting components of a sample include a particle sorting module having deflection plates, such as described in U.S. Patent Publication No. 2017/0299493, filed on March 28, 2017.

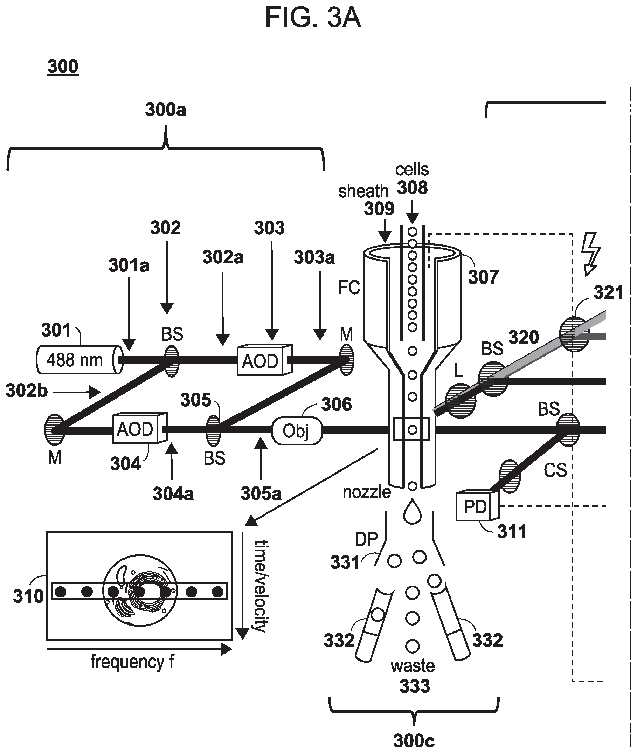

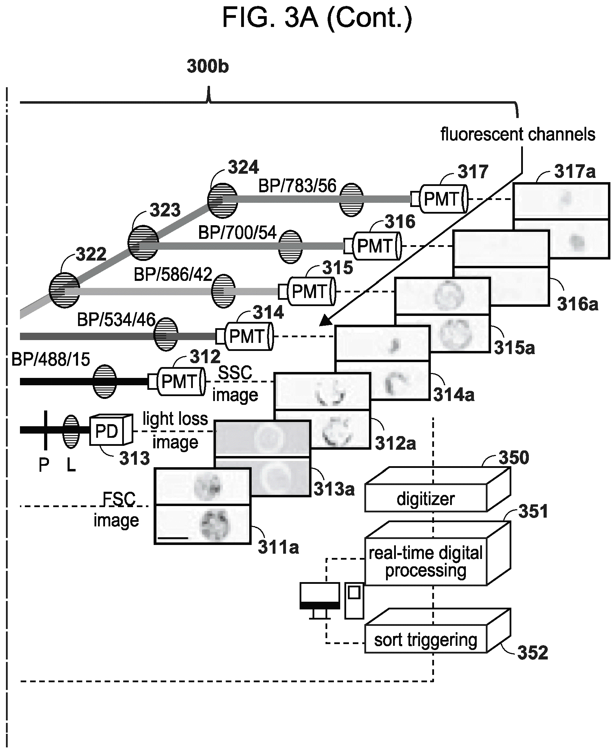

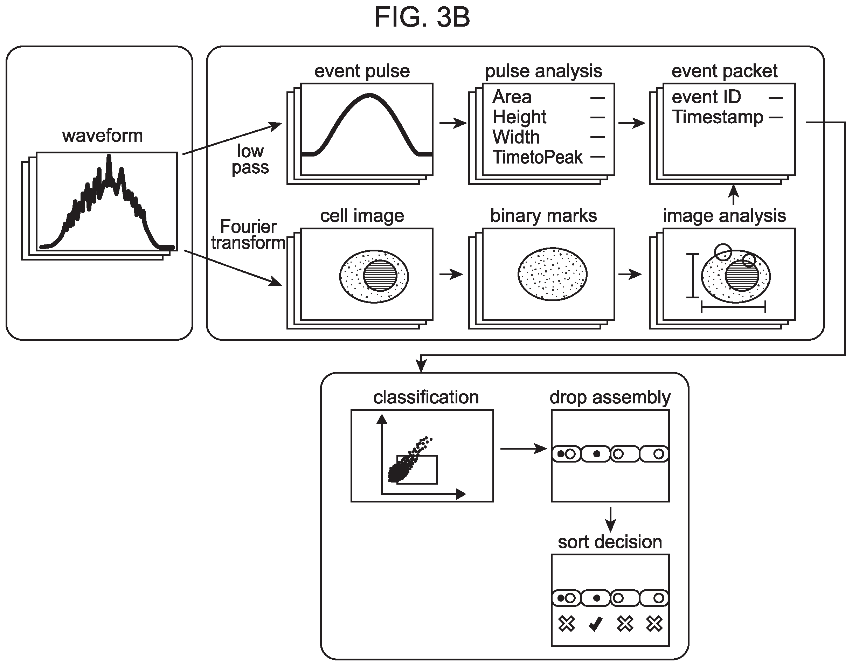

In certain embodiments, systems are a fluorescence imaging using radiofrequency tagged emission image-enabled particle sorter, such as depicted in **FIG. 3****.** Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017. In certain embodiments, sorting component 300c includes a sort decision module having a plurality of sort decision units, such as those described in U.S. Patent Publication No. 2020/0256781.

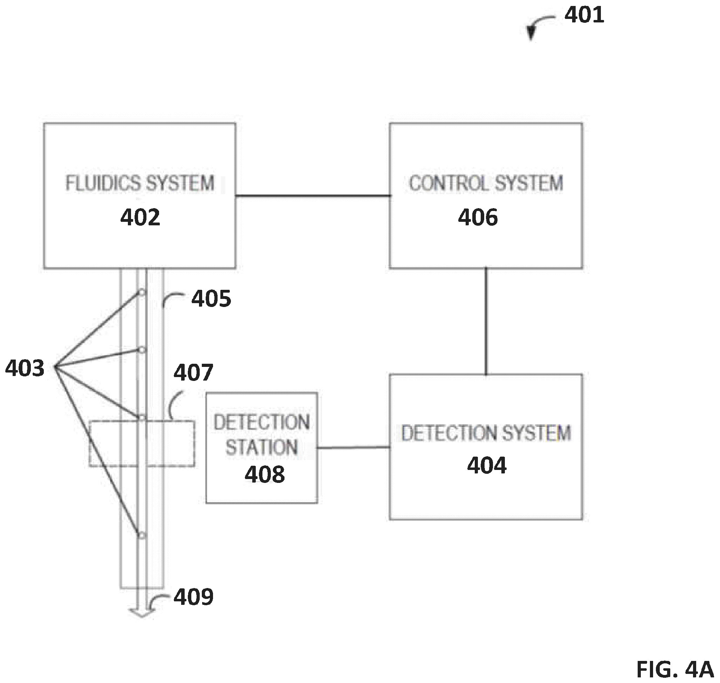

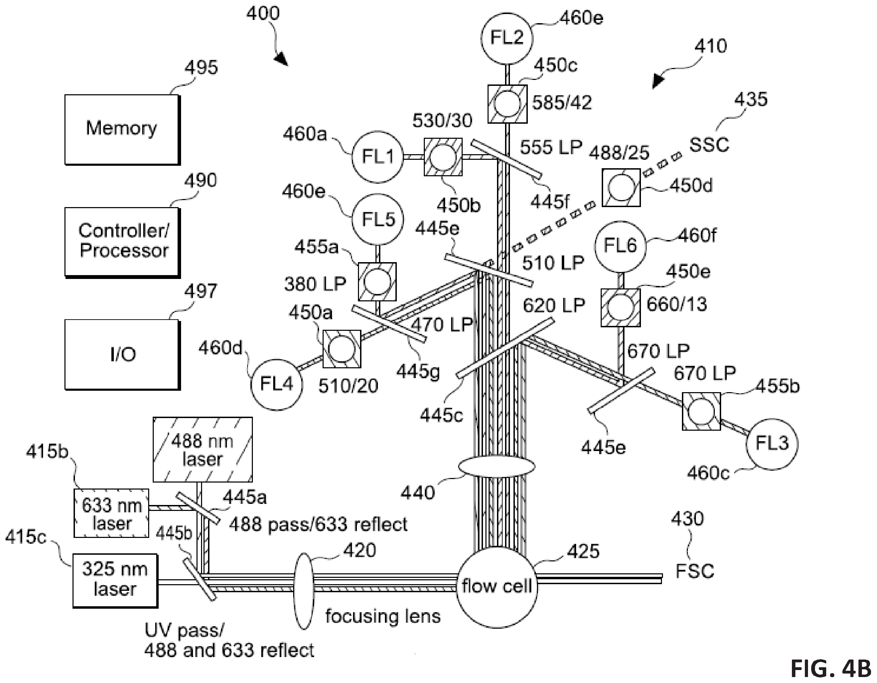

In some embodiments, systems are particle analyzers where the particle analysis system 401 **(****FIG. 4****)** can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4****,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

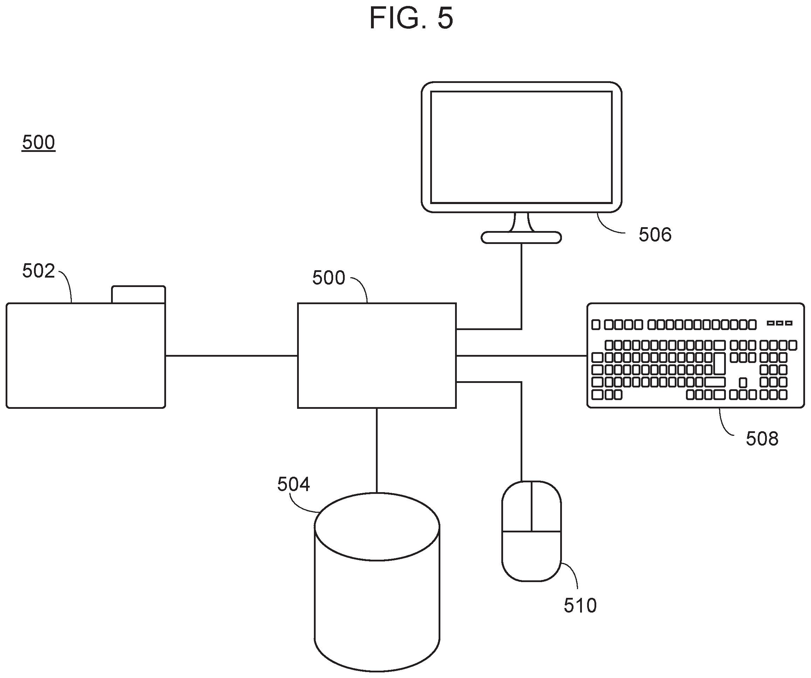

**FIG. 5** shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel. Analytics controller 500 may be a processor configured to carry out methods of the invention, e.g., by applying a distance-based classification model to determine a density distinguishing threshold in a size-based analyte feature space, applying a density-based clustering algorithm to separate the analyte data into a high-density cluster and a low-density cluster based on the density threshold and classifying the analyte data based on the high-density cluster and the low density cluster based on the size-based analyte feature space.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown **in** **FIG. 5****,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

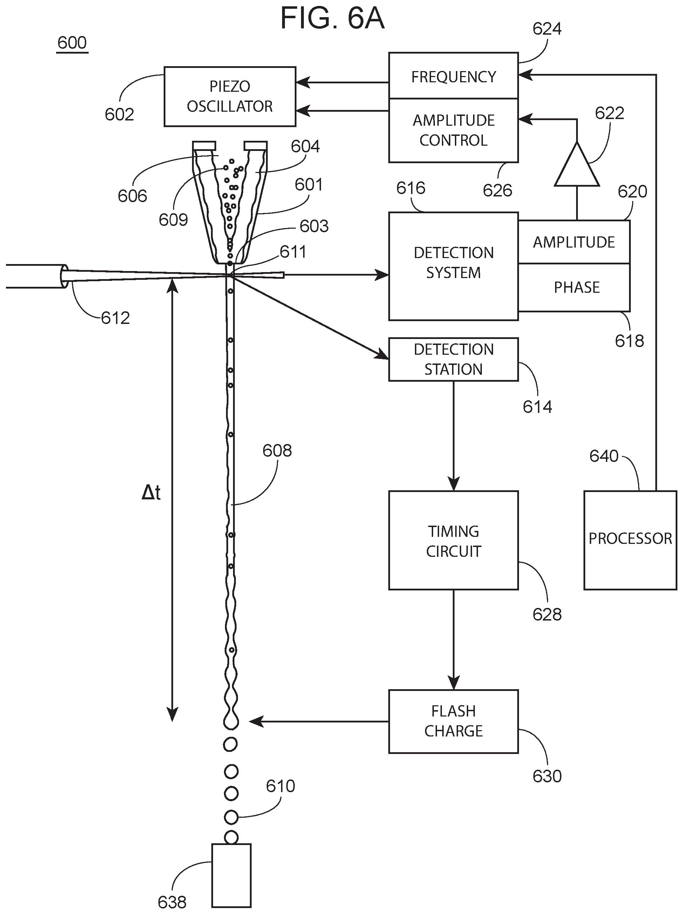

**FIG. 6A** is a schematic drawing of a particle sorter system 600 (e.g., the particle analyzer or sorting system 502) in accordance with one embodiment presented herein. In some embodiments, the particle sorter system 600 is a cell sorter system. As shown in **FIG. 6A****,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A****,** the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039, which is incorporated herein by reference in its entirety. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

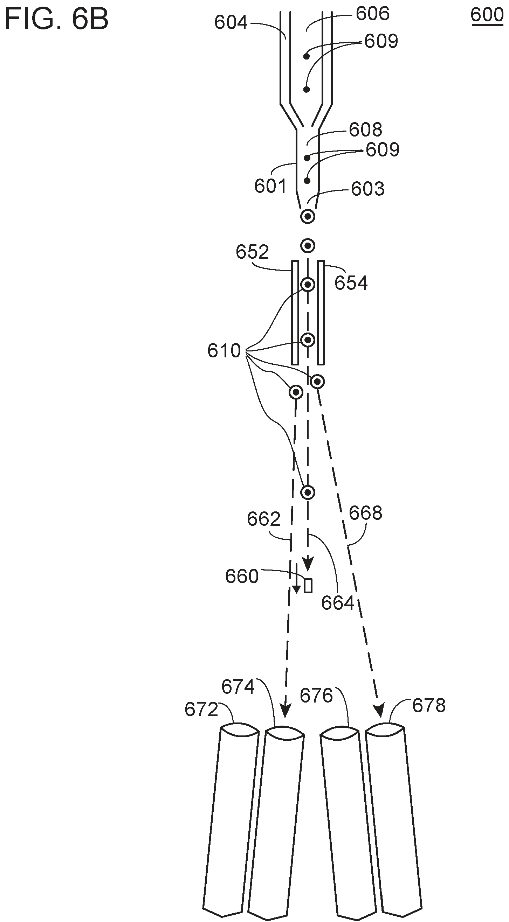

**FIG. 6B** is a schematic drawing of a particle sorter system, in accordance with one embodiment presented herein. The particle sorter system 600 shown in **FIG. 6B****,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in **FIG. 6B****,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in **FIG. 6B** include the BD FACSAria^{™} line of flow cytometers commercially provided by Becton, Dickinson and Company (Franklin Lakes, NJ).

### COMPUTER-CONTROLLED SYSTEMS

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

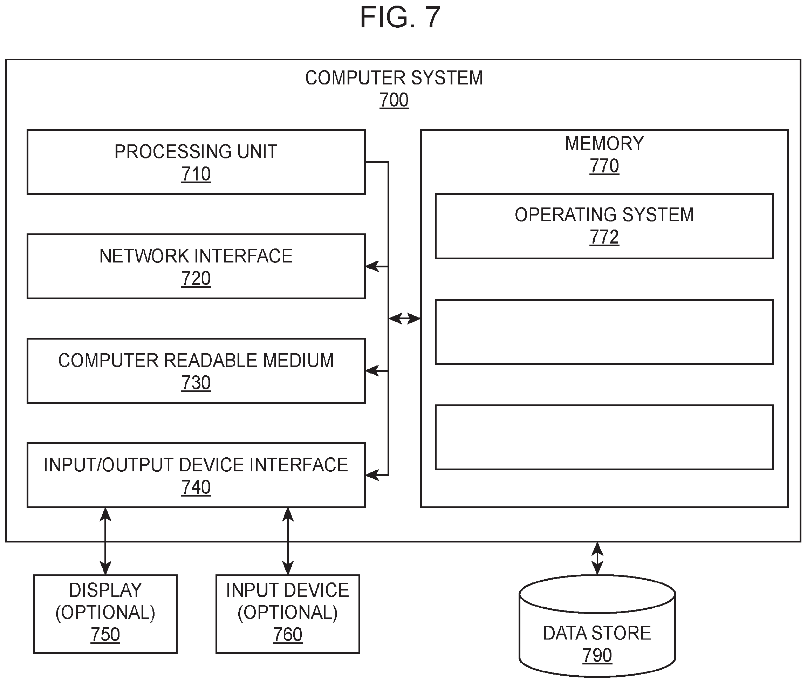

**FIG. 7** depicts a general architecture of an example computing device 700 according to certain embodiments. The general architecture of the computing device 700 depicted in **FIG. 7** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo^{®}) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components in some embodiments) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

### NON-TRANSITORY COMPUTER-READABLE STORAGE MEDIA

Aspects of the present disclosure further include non-transitory computer readable storage media having instructions for practicing the subject methods, such as to practice one or more computer implemented methods described herein. Computer readable storage media may be employed on one or more computers for complete automation or partial automation of a system for practicing methods described herein. In certain embodiments, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Python, Java, Java Script, C, C#, C++, Go, R, Swift, PHP, as well as many others.

In some embodiments, the non-transitory computer readable storage medium includes algorithm for irradiating a sample having cells in a flow stream, algorithm for measuring light from the irradiated cells with an imaging photodetector, algorithm for measuring autofluorescence spectra generated by the irradiated cells in the sample with a spectral photodetector, algorithm for calculating a cell parameter based on image data generated from the measured light, algorithm for generating one or more population clusters based on the measured autofluorescence spectra and the calculated cell parameters, algorithm for assessing morphological heterogeneity of the cells in each of the population clusters and algorithm for classifying particles of the population clusters based on the assessed morphological heterogeneity.

In some instances, the non-transitory computer readable storage medium includes algorithm for measuring the autofluorescence spectra by the imaging photodetector in an imaging channel of the light detection system. In some instances, the non-transitory computer readable storage medium includes algorithm for measuring the autofluorescence spectra by the spectral photodetector in a spectral channel of the light detection system. In some instances, the non-transitory computer readable storage medium includes algorithm for measuring autofluorescence by one of a plurality of spectral photodetectors and includes algorithm for selecting the one photodetector channel of the plurality of spectral photodetectors based on the spectral profile of the autofluorescence. In some instances, the non-transitory computer readable storage medium includes algorithm for selecting the photodetector channel based on a maximal intensity of the autofluorescence.

In some embodiments, the non-transitory computer readable storage medium includes algorithm for calculating cell parameters based on image data generated from the measured light. In some instances, the non-transitory computer readable storage medium includes algorithm for calculating the cell parameters from data signals generated in an imaging photodetector channel of the light detection system. In some instances, the non-transitory computer readable storage medium includes algorithm for calculating the cell parameters from data signals generated in a plurality of different imaging photodetector channels of the light detection system. In certain instances, the non-transitory computer readable storage medium includes algorithm for calculating at least one cell parameter from data signals generated in spectral photodetector channels of the light detection system. In certain instances, the non-transitory computer readable storage medium includes algorithm for calculating at least one cell parameter from data signals generated in a plurality of spectral photodetector channels of the light detection system. In some instances, the non-transitory computer readable storage medium includes algorithm for calculating one or more image parameters from the image data or a generated image of the cells. In some instances, the non-transitory computer readable storage medium includes algorithm for calculating the cell parameter based on the image parameter. In some instances, the image parameter is a quantitative image parameter. In some instances, the parameter is selected from center of mass, delta center of mass, diffusivity, eccentricity, long axis moment, maximum intensity, radial moment, short axis moment, size, total intensity, light loss by the cell nuclei, forward scattered light by the cell nuclei, side scattered light by the cell nuclei and combinations thereof. In some instances, the non-transitory computer readable storage medium includes algorithm for calculating the image parameter from images generated based on fluorescence measured from the cells, light loss measured for the cells, forward scattered light measured for the cells, side scattered light measured for the cells and combinations thereof.

In embodiments, the non-transitory computer readable storage medium includes algorithm for generating the one or more population clusters by dimensionality reduction. In some instances, the dimensionality reduction includes Uniform Manifold Approximation and Projection (UMAP) or t-distributed stochastic neighbor embedding (t-SNE). In some instances, generating the population clusters includes K-nearest neighbors (KNN) clustering. In some instances, the non-transitory computer readable storage medium includes algorithm for generating the clusters by unsupervised dimensionality reduction. In certain instances, the non-transitory computer readable storage medium includes algorithm for assessing cell populations in the generated clusters with a cluster explorer. In certain instances, the non-transitory computer readable storage medium includes algorithm for backgating unique clusters.

In some embodiments, the non-transitory computer readable storage medium includes algorithm for assessing the morphological heterogeneity of the cells in one or more of the generated population clusters. In some instances, the non-transitory computer readable storage medium includes algorithm for assessing the heterogeneity of the cells in each of the generated population clusters. In some embodiments, the non-transitory computer readable storage medium includes algorithm for assessing the heterogeneity based on one or more of the cell parameters. In some instances, the non-transitory computer readable storage medium includes algorithm for determining the heterogeneity based on observations from images of the cells in the population clusters. In some instances, the non-transitory computer readable storage medium includes algorithm for identifying and gating together cells having different heterogeneity.

In some embodiments, the non-transitory computer readable storage medium includes algorithm for quantifying a change in the cells of the sample. In some instances, the non-transitory computer readable storage medium includes algorithm for assessing the heterogeneity of the cells of the sample by determining that there has been a change in the cells in the sample. In some instances, the non-transitory computer readable storage medium includes algorithm for quantifying the change in the cells by quantifying a change in the autofluorescence spectra of the cells in the sample. In some instances, the non-transitory computer readable storage medium includes algorithm for quantifying the change in the cells by quantifying a change in an image parameter of the cells. In some instances, the non-transitory computer readable storage medium includes algorithm for determining heterogeneity of the cells based on a change in the autofluorescence spectra of the cells. In some instances, the non-transitory computer readable storage medium includes algorithm for determining the heterogeneity of the cells based on a change in autofluorescence intensity measured from the cells. In some instances, the non-transitory computer readable storage medium includes algorithm for determining heterogeneity of the cells based on a change in imaging parameters of one or more population clusters. In certain instances, the change in imaging parameters includes one or more of eccentricity, center of mass and size. In some embodiments, the cells are autotrophic cells, heterotrophic cells, tumor cells, immune cells, bacteria or lineage-labeled cells.

In some embodiments, the non-transitory computer readable storage medium includes algorithm for classifying cells of the sample based on the assessed morphological heterogeneity. In some instances, the non-transitory computer readable storage medium includes algorithm for classifying the cells based on autofluorescence spectra, changes in autofluorescence spectra or autofluorescence intensity. In some instances, the non-transitory computer readable storage medium includes algorithm for classifying the cells based on image parameters, calculated cell parameters or visualized observations from images of the cells. In some instances, one or more population clusters are classified. In certain instances, one or more subset groups from each population clusters are classified.

In some instances, the non-transitory computer readable storage medium includes algorithm for classifying the cells by determining one or more gates for the cells in each of the population clusters of the sample. In some instances, the gates are sorting gates (e.g., for use in generating a sorting decision). In some instances, the one or more sorting gates capture cells of a target particle population cluster and exclude particles of a non-target particle population cluster. In some instances, the sorting gates maximize the inclusion yield of cells of a target particle population cluster. In some instances, the sorting gates maximize the exclusion of cells of a non-target particle population cluster.

The non-transitory computer readable storage medium may be employed on one or more computer systems having a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as those mentioned above, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques.

### KITS

Aspects of the present disclosure further include kits, where kits include storage media such as a magneto-optical disk, CD-ROM, CD-R, magnetic tape, non-volatile memory card, ROM, DVD-ROM, Blue-ray disk, solid state disk, and network attached storage (NAS). Any of these program storage media, or others now in use or that may later be developed, may be included in the subject kits. In embodiments, the program storage media include instructions for assessing morphological heterogeneity of cells of a sample as in the methods and for use with the systems described herein. In embodiments, the instructions contained on computer readable media provided in the subject kits, or a portion thereof, can be implemented as software components of a software for analyzing data. In these embodiments, computer-controlled systems according to the instant disclosure may function as a software "plugin" for an existing software package (e.g., FlowJo^{®}).

In addition to the above components, the subject kits may further include (in some embodiments) instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject methods, systems and computer systems find use as an upstream assessment for cells such as for applications where cells having particular morphologies or cell type (e.g., rare cells) may be used, such as in molecular biology assays (e.g., in gene expression analysis). In some instances, the present disclosure provides for high quality and purity cells isolated from a heterogeneous sample. In addition, the subject systems and methods find use in a variety of applications where it is desirable to analyze and sort particle components in a sample in a fluid medium. In some embodiments, the systems and methods described herein find use in flow cytometry characterization of cell isolates. Embodiments of the present disclosure find use where it is desirable to provide a flow cytometer with improved cell sorting accuracy, enhanced particle collection, particle charging efficiency, more accurate particle charging and enhanced particle deflection during cell sorting.

Embodiments of the present disclosure also find use in applications where cells prepared from a biological sample may be desired for research, laboratory testing or for use in therapy. In some embodiments, the subject methods and devices may facilitate obtaining individual cells prepared from a target fluidic or tissue biological sample. For example, the subject methods and systems facilitate obtaining particular cells from fluidic or tissue samples to be used as a research or diagnostic specimen. Methods and devices of the present disclosure allow for separating and collecting cells from a biological sample (e.g., organ, tissue, tissue fragment, fluid) with enhanced efficiency and low cost as compared to traditional flow cytometry systems.

### EXAMPLES

The following examples are put forth so as to provide those of ordinary skill in the art with a complete disclosure and description of how to make and use the present invention, and are not intended to limit the scope of what the inventors regard as their invention.

### Example 1 - Characterizing Heterogeneity with Autofluorescence as a Fluorescence Parameter

It has been reported that algae exhibit high autofluorescence due to the presence of chlorophyll, which naturally emits strong fluorescence when excited by light. Autotrophic algae produce their own food through photosynthesis. In contrast, heterotrophic algae obtain their nutrients by consuming glucose, and this metabolic shift is accompanied by a decrease in chlorophyll levels.

Green algae samples were analyzed on the FACSDiscover^{™} Chorus System. As an initial step, the spectral profile of chlorophyll was measured and visualized and assigned to Imaging Channel 3 of the light detection system to capture and record imaging parameters utilizing CellView technology. Utilizing a detector that captured fluorescence from chlorophyll (photodetector channel UV15), autotrophic algae were confirmed to exhibit higher autofluorescence than heterotrophic algae. (Figure 8A) As shown in Figure 8A, a plot of the assigned imaging photodetector channel, UV15 showed a change in singlets captured by the side-scatter photodetector channel, SSC. This change in measurable light from the green algae sample demonstrates that the light detection system is detecting the change from autotrophic cells to heterotrophic cells by the change in autofluorescence.

To determine if morphological features differ between the two samples, imaging parameters (such as eccentricity, radial moment, maximum intensity, size, long axis moment, etc.) were analyzed to determine if cellular parameters are demonstrated in the change between the autotrophic cells and heterotrophic cells (i.e., linked to the metabolic switch). Using T-Rex (Tracking Responders EXpanding) plugin on FlowJo v10.10, autotrophic and heterotrophic algae were clustered separately (by Density-Based Spatial Clustering of Applications with Noise, DBSCAN). Intra-sample heterogeneity was assessed for each of the clusters and found more intra-sample heterogeneity in the autotrophic algae (Figure 8B).

Clusters were further characterized using Cluster Explorer and Marker Enrichment Modeling tool on Flow Jo and could be identified by their unique morphology and autofluorescence. Figure 8C depicts that decreased chlorophyll was found in heterotrophic algae to be correlated with an increase in imaging parameters size (FSC) and decrease in imaging parameters Max Intensity and Total Intensity. In addition, more intra-sample heterogeneity was observed in the autotrophic algae. Autotrophic clusters could be identified by their unique morphology and autofluorescence and correlated with imaging parameters FSC (size) and Eccentricity (Figure 8C).
In some instances, deciphering heterogeneity includes sorting specific populations, followed by sequencing or functional analyses. The imaging parameters identified by the clustering of the cell populations (e.g., by T-REX) were used to visualize the images of the cells in each cluster and verify the phenotype correlated with the imaging parameters identified previously. Figure 1D depicts images generated for each cell using the different imaging parameters. When the clusters are visualized (e.g., by CellView panel), cellular morphology correlated with the imaging parameters with Cluster 4 having larger size and lower chlorophyll than the other clusters and cluster 1-3 showing heterogeneity in morphology. The cell image panels in Figure 8D correspond to those set forth in the cluster analysis plot shown in Figure 8B. A gating strategy that efficiently utilizes fluorescent and imaging parameters to identify unique subpopulations that generated as sort gates for downstream functional studies of these populations. A flow chart for assessing heterogeneity of a complex sample based on the autofluorescence and assigned imaging parameters is shown in Figure 8E. Autofluorescence spectra of the sample is measured in one or more of a spectral photodetector channel and an imaging photodetector channel. An imaging photodetector channel is assigned to capture the autofluorescence signal. In some instances, different sample conditions are applied such as adding reagents or components which correspond to a change in the cells of the sample (e.g., a metabolic switch such as from being autotrophic to heterotrophic) The autofluorescence spectra are measured for each of the different conditions and imaging parameters are generated. Population clusters are generated for the cells of the sample by performing dimensionality reduction and unsupervised clustering. Each individual cluster is characterized (such as by visualization of each cell using a CellView panel). The heterogeneity of the cells of the sample is assessed. Sort gates can be calculated based on the assessed morphological heterogeneity and the visualized images of the cells.

While high autofluorescence samples have typically been a challenge, this study used a label-free methodology to characterize photoautotrophic, mixotrophic and heterotrophic algae. Photoautotrophic, mixotrophic and heterotrophic algae clustered separately, with more intra-sample heterogeneity observed in the autotrophic algae. Clusters were identified by their unique morphology and autofluorescence. Novel gating strategies generated through HyperFinder allowed the unique clusters to be identified on instrument and associated images visualized on the experiment page, enabling phenotypic validation of the clusters identified by size, morphology, and chlorophyll expression of the cells. The gating strategy defined by HyperFinder efficiently utilizes fluorescent and imaging parameters to identify unique subpopulations that can be used as sort gates for downstream functional studies of these populations.

This study presents a comprehensive workflow for the unsupervised characterization of cellular heterogeneity using label-free spectral flow cytometry and imaging parameters. This method is applicable to various sample types, including those with high autofluorescence.

### Example 2 - Leveraging Autofluorescence as a Fluorescence Parameter for Investigating and Characterizing Heterogeneity in a Complex Sample

To study the change in cellular parameters and morphological heterogeneity of cells in a sample the biological model system of green algae *Auxenochlorella protothecoides* (AP) and *Chromochloris zofingiensis* (CZ) was used. Each of these green algae are unicellular green algae, eukaryotic cells and posses metabolic flexibility. These cells exhibit a photosynthetic switch when in the presence of sugar supplement going from being autotrophic to heterotrophic. Figure 9A depicts *Chromochloris zofingiensis* (CZ) cells under the magnification of a microscope and the color change when these cells undergo a photosynthetic switch.

To study metabolic changes in the green algae cell samples, autofluorescence spectra of the cells were measured before adding sugar to the sample. Autofluorescence spectra were measured in a spectral photodetector channel and imaging photodetector channels. Imaging parameters are assigned to the measured fluorescence. Analysis plots of the generated imaging parameters and spectral plots for the autotrophic sample of *Auxenochlorella protothecoides* is shown in Figure 9B. Images of the cells are also depicted on an Image Wall which provide for visual analysis of certain cell morphological properties. Data for different cell parameters can be generated based on an assessment of one or more of the images of the cells, imaging parameters and the spectral characteristics of the fluorescence. The spectral profile of chlorophyll in AP was visualized and assigned Imaging Channel 3 to capture and record imaging parameters. Utilizing UV15, a detector that captured fluorescence from chlorophyll, the autotrophic algae had higher autofluorescence than heterotrophic algae.

Figure 9C depicts the changes in generated imaging parameters when glucose is added to the autotrophic cells of *Auxenochlorella protothecoides.* As shown in Figure 9C, imaging parameters of Lightloss, eccentricity and autofluorescence in imaging channel UV15 exhibit significant changes when glucose is added to the green algae sample confirming its change to include heterotrophic cells. Based on the autofluorescence and imaging channel plots, population clusters can be generated for the two different populations (autotrophic and heterotrophic cells). In some instances, intra-sample heterogeneity is assessed to determine phenotypic changes that accompany the change in cell type.

To determine if morphological features differ between the two samples, imaging parameters (such as eccentricity, radial moment, maximum intensity, size, long axis moment, etc.) were assessed to determine which could be used to analyze the metabolic switch. Using T-Rex (Tracking Responders EXpanding) plugin on FlowJo v10.10 autotrophic and heterotrophic algae clustered separately, with more intra-sample heterogeneity observed in the autotrophic algae. Population clusters are generated for the autotrophic and heterotrophic sample cells. Unsupervised dimensionality reduction is applied to identify the areas of difference between two user specified conditions. Dimensionality reduction can be carried out by Uniform Manifold Approximation and Projection (UMAP) or t-distributed stochastic neighbor embedding (t-SNE). K nearest neighbors clustering is used to identify regions within the UMAP. In certain instances, analysis of the population clusters includes determining if there is overrepresentation from either condition (autotrophic or heterotrophic) in a region. Figure 9D depicts analysis by UMAP of the population clusters of an *Auxenochlorella protothecoides* sample and a sample having *Auxenochlorella protothecoides* and *Chromochloris zofingiensis.* The clusters in the first plot depict autotrophic AP sample cells and heterotrophic AP sample cells as determined using the autofluorescence spectra. The second plot depicts clusters of autotrophic AP sample cells and autotrophic CZ sample cells. The plot of AP and CZ sample cells exhibits cluster heterogeneity with both similar and different cells. The plots shown in Figure 9D show what the results look like for samples that are very dissimilar (left) and samples that are largely similar (right)-blue-red cluster plot that shows which regions have significant expansion of one category or the other.

Figure 9E depicts clustering of the data from the *Auxenochlorella protothecoides* and *Chromochloris zofingiensis* cells by Density-Based Spatial Clustering of Applications with Noise (DBScan) which creates clusters centered on the regions where there is a difference and then identifies the clusters that match the region of different. If it finds regions where this is true- the clustering algorithm is refined and can to go through and create clusters centered on the regions where there is a difference clusters the data (set no cells to consider in a cluster) then identifies the clusters that match the region of difference. Since UMAP analyses were specific to a given individual and pair of samples, UMAP axes were labeled to indicate the individual and comparison being made, which indicated a comparison of day 0 and day 7 for individual. The KNN search from fast nearest neighbors (FNN) was used to find the nearest neighbors for a given cell. For this, a KNN search was done for every cell using the low-dimensional projection of the data as an input for the neighborhood search. The value for k, or the number of nearest neighbors, was determined by an optimization of tetramer enrichment within a neighborhood. Percent change per cell is then calculated based on the abundance of cells from the two samples in the KNN region. For regions expanding or contracting significantly (≤5 % and ≥95 % change), DBScan is used to cluster the cells and then MEM is used to quantitatively describe the phenotype. Figure 9F depicts an example of an overview of DBScan generated pseudo-colored plots analyzing all spectral and imaging parameters. The plots depict differences from right to left and from top to bottom. Figure 9G depicts another example of generating cluster populations and assessing heterogeneity within each cluster according to certain embodiments. Imaging parameters of Max Intensity for autofluoresecence and Size (from forward scatter FSC) as well as Long Axis Moment and Eccentricity were used in cluster explorer to assess heterogeneity.

Figure 9H depicts further analysis of autofluorescence and morphology of population clusters according to certain embodiments. Clusters were further characterized using Cluster Explorer and Marker Enrichment Modeling tool on Flow Jo and could be identified by their unique morphology and autofluorescence. Decreased chlorophyll in heterotrophic algae correlated with increase in imaging parameters size (FSC) and decrease in imaging parameters Max Intensity and total Intensity. In addition, more intra-sample heterogeneity was observed in the autotrophic algae. Autotrophic clusters could be identified by their unique morphology and autofluorescence and correlated with imaging parameters FSC (size) and Eccentricity. Here, a statistical reference point intended as a statistical null hypothesis was used as the MEM reference. For this statistical null MEM reference, the magnitude was zero and the IQR was the median IQR of all features chosen for the MEM analysis. Values were mapped from 0 enrichment to a maximum of +10 relative enrichment. The contribution of IQR was zeroed out for populations with a magnitude of 0.

Figure 9I depicts visualizing cells using different imaging parameters determined from the cluster analysis according to certain embodiments. Deciphering heterogeneity often involves sorting specific populations, followed by sequencing or functional analyses. Towards this end, the imaging parameters identified above to visualize the images of the cells in each cluster and verify the phenotype correlated with the imaging parameters previously identified. When the clusters are visualized on CellView, cellular morphology correlated with the imaging parameters with Cluster 4 having larger size and lower chlorophyll than the other clusters and cluster 1-3 showing heterogeneity in morphology.

In conclusion, the described approach quantifies changes in parameters for each cell which allows for assessing cellular morphological heterogeneity. The gating strategy efficiently utilizes autofluorescence and imaging parameters to identify unique subpopulations that can be utilized as sort gates for downstream functional studies of these populations.

Notwithstanding the appended claims, the disclosure is also defined by the following clauses:
1. A method comprising:
   irradiating a sample comprising cells in a flow stream with a light source in a flow cytometer;
   measuring light from the irradiated cells with an imaging photodetector;
   measuring autofluorescence spectra generated by the irradiated cells in the sample with a spectral photodetector;
   calculating a cell parameter based on image data generated from the measured light;
   generating one or more population clusters based on the measured autofluorescence spectra and the calculated cell parameter;
   assessing morphological heterogeneity of the cells in each of the population clusters; and
   classifying cells of the population clusters based on the assessed morphological heterogeneity.
2. The method according to clause 1, wherein the autofluorescence spectra are measured by the imaging photodetector in an imaging channel of a light detection system.
3. The method according to clause 2, wherein the autofluorescence spectra are measured by the spectral photodetector in a spectral channel of the light detection system.
4. The method according to any one of clauses 2-3, wherein measuring autofluorescence is performed by one of a plurality of spectral photodetectors, and wherein the method further comprises selecting the one photodetector channel of the plurality of spectral photodetectors based on the spectral profile of the autofluorescence.
5. The method according to clause 4, wherein the spectral photodetector channel is selected based on a maximal intensity of the autofluorescence.
6. The method according to any one of clauses 1-5, wherein generating one or more population clusters comprises dimensionality reduction.
7. The method according to clause 6, wherein the dimensionality reduction comprises Uniform Manifold Approximation and Projection (UMAP) or t-distributed stochastic neighbor embedding (t-SNE).
8. The method according to any one of clauses 1-5, wherein generating one or more population clusters comprises K-nearest neighbors (KNN) clustering.
9. The method according to any one of clauses 1-8, wherein the method further comprises generating an image of the cell from the image data.
10. The method according to clause 9, wherein the method further comprises calculating an image parameter based on one or more of the image data and the image of the cell.
11. The method according to clause 10, wherein the image parameters are selected from the group consisting of center of mass, delta center of mass, diffusivity, eccentricity, long axis moment, maximum intensity, radial moment, short axis moment, size, total intensity, light loss by the cell nuclei, forward scattered light by the cell nuclei, side scattered light by the cell nuclei and combinations thereof.
12. The method according to any one of clauses 1-11, wherein the method further comprises quantifying a change in the cells of the sample.
13. The method according to clause 12, wherein quantifying the change in the cells comprises quantifying a change in the autofluorescence spectra of the cells in the sample.
14. The method according to any one of clauses 12-13, wherein quantifying the change in the cells comprises quantifying a change in an image parameter of the cells.
15. The method according to any one of clauses 12-14, further comprising determining a heterogeneity of the cells based on a change in the autofluorescence spectra of the cells.
16. The method according to any one of clauses 12-14, further comprising determining a heterogeneity of the cells based on a change in autofluorescence intensity measured from the cells.
17. The method according to any one of clauses 12-16, further comprising determining a heterogeneity of the cells based on a change in the imaging parameters of one or more population clusters.
18. The method according to clause 17, wherein the change in the imaging parameters comprises one or more of eccentricity, center of mass, and size.
19. The method according to any one of clauses 1-18, wherein the cells are selected from the group consisting of autotrophic cells, heterotrophic cells, tumor cells, immune cells, bacteria and lineage-labeled cells.
20. The method according to any one of clauses 1-19, wherein the method further comprises determining one or more sorting gates for the classified cells of the sample.
21. The method according to clause 20, wherein the one or more sorting gates capture cells of a target particle population cluster and exclude cells of a non-target particle population cluster.
22. The method according to clause 21, wherein the sorting gates maximize the inclusion yield of cells of a target particle population cluster.
23. The method according to any one of clauses 20-22, wherein the sorting gates maximize the exclusion of cells of a non-target particle population cluster.
24. The method according to any one of clauses 1-23, wherein the method further comprises sorting cells of the sample into a plurality of sample containers.
25. A system comprising:
   a light source configured to irradiate cells of a sample with light in a flow stream;
   a light detection system comprising an imaging photodetector and a spectral photodetector for measuring light from the irradiated cells; and
   a processor comprising memory operably coupled to the processor wherein the memory comprises instructions stored thereon, which when executed by the processor, cause the processor to:
      measure autofluorescence spectra generated by the cells in the sample with the spectral photodetector;
      calculate a cell parameter based on image data generated from the measured light;
      generate one or more population clusters based on the measured autofluorescence spectra and the calculated cell parameter;
      assess morphological heterogeneity of the cells in each of the population clusters; and
      classify particles of the population clusters based on the assessed morphological heterogeneity.
26. The system according to clause 25, wherein the light detection system comprises imaging photodetector channels and spectral photodetector channels.
27. The system according to clause 26, wherein the light detection system is configured to measure the autofluorescence spectra by the imaging photodetector in the imaging channel.
28. The system according to clause 26, wherein light detection system is configured to measure the autofluorescence spectra by the spectral photodetector in the spectral channel.
29. The system according to any one of clauses 26-28, wherein the light detection system comprises a plurality of spectral photodetectors and the memory comprises instructions for selecting the one photodetector channel of the plurality of spectral photodetectors based on the spectral profile of the autofluorescence.
30. The system according to clause 29, wherein the memory comprises instructions for selecting the one photodetector channel based on a maximal intensity of the autofluorescence.
31. The system according to any one of clauses 25-30, wherein the memory comprises instructions for generating one or more population clusters by dimensionality reduction.
32. The system according to clause 31, wherein the dimensionality reduction comprises Uniform Manifold Approximation and Projection (UMAP) or t-distributed stochastic neighbor embedding (t-SNE).
33. The system according to any one of clauses 25-32, wherein the memory comprises instructions for generating one or more population clusters by K-nearest neighbors (KNN) clustering.
34. The system according to any one of clauses 25-33, wherein the memory further comprises instructions for generating an image of the cell from the image data.
35. The system according to clause 34, wherein the memory further comprises instructions for calculating an image parameter based on one or more of the image data and the image of the cell.
36. The system according to clause 35, wherein the image parameters are selected from the group consisting of center of mass, delta center of mass, diffusivity, eccentricity, long axis moment, maximum intensity, radial moment, short axis moment, size, total intensity, light loss by the cell nuclei, forward scattered light by the cell nuclei, side scattered light by the cell nuclei and combinations thereof.
37. The system according to any one of clauses 25-36, wherein the memory further comprises instructions for quantifying a change in the cells of the sample.
38. The system according to clause 37, wherein the memory comprises instructions for quantifying the change in the cells by quantifying a change in the autofluorescence spectra of the cells in the sample.
39. The system according to any one of clauses 37-38, wherein the memory comprises instructions for quantifying the change in the cells by quantifying a change in an image parameter of the cells.
40. The system according to any one of clauses 37-39, wherein the memory further comprises instructions for determining heterogeneity of the cells based on a change in the autofluorescence spectra of the cells.
41. The system according to any one of clauses 37-39, wherein the memory further comprises instructions for determining heterogeneity of the cells based on a change in autofluorescence intensity measured from the cells.
42. The system according to any one of clauses 37-40, wherein the memory comprises instructions for determining heterogeneity of the cells based on a change in the imaging parameters of one or more population clusters.
43. The system according to clause 42, wherein the change in the imaging parameters comprises one or more of eccentricity, center of mass and size.
44. The system according to any one of clauses 25-43, wherein the cells are selected from the group consisting of autotrophic cells, heterotrophic cells, tumor cells, immune cells, bacteria and lineage-labeled cells.
45. The system according to any one of clauses 25-44, wherein the memory further comprises instructions for determining one or more sorting gates for the classified cells of the sample.
46. The system according to clause 45, wherein the one or more sorting gates capture cells of a target particle population cluster and exclude cells of a non-target particle population cluster.
47. The system according to clause 46, wherein the sorting gates maximize the inclusion yield of cells of a target particle population cluster.
48. The system according to any one of clauses 45-47, wherein the sorting gates maximize the exclusion of cells of a non-target particle population cluster.
49. The system according to any one of clauses 25-48, further comprising a cell sorter.
50. The system according to clause 49, wherein the cell sorter comprises a droplet deflector.
51. The system according to any one of clauses 25-50, wherein the light source comprises a light beam generator component configured to generate at least a first beam of frequency shifted light and a second beam of frequency shifted light.
52. The system according to clause 51, wherein the light beam generator comprises an acousto-optic deflector.
53. The system according to any one clauses 51-52, wherein the light beam generator comprises a direct digital synthesizer (DDS) RF comb generator.
54. The system according to any one of clauses 51-53, wherein the light beam generator component is configured to generate a local oscillator beam.
55. The system according to any one of clauses 51-54, wherein the light beam generator component is configured to generate a plurality of frequency-shifted comb beams.
56. The system according to any one of clauses 25-55, wherein the light source comprises a laser.
57. The system according to clause 56, wherein the laser is a continuous wave laser.
58. The system according to any one of clauses 25-57, wherein the system is an imaging flow cytometer.
59. The system according to any one of clauses 25-58, wherein the system comprises an integrated circuit device.
60. The system according to clause 59, wherein the integrated circuit device is a field programmable gate array (FPGA), application specific integrated circuit (ASIC) or a complex programmable logic device (CPLD).
61. A non-transitory computer readable storage medium comprising instructions stored thereon wherein the non-transitory computer readable storage medium comprises:
   algorithm for irradiating a sample comprising cells in a flow stream;
   algorithm for measuring light from the irradiated cells with an imaging photodetector;
   algorithm for measuring autofluorescence spectra generated by the irradiated cells in the sample with a spectral photodetector;
   algorithm for calculating a cell parameter based on image data generated from the measured light;
   algorithm for generating one or more population clusters based on the measured autofluorescence spectra and the calculated cell parameter;
   algorithm for assessing morphological heterogeneity of the cells in each of the population clusters; and
   algorithm for classifying particles of the population clusters based on the assessed morphological heterogeneity.
62. The non-transitory computer readable storage medium according clause 61, wherein the non-transitory computer readable storage medium comprises algorithm for measuring the autofluorescence spectra by the imaging photodetector in an imaging channel of a light detection system.
63. The non-transitory computer readable storage medium according to clause 61, wherein the non-transitory computer readable storage medium comprises algorithm for measuring the autofluorescence spectra by the spectral photodetector in a spectral channel of the light detection system.
64. The non-transitory computer readable storage medium according to any one of clauses 62-63, wherein the non-transitory computer readable storage medium comprises algorithm for measuring autofluorescence by one of a plurality of spectral photodetectors and comprises algorithm for selecting the one photodetector channel of the plurality of spectral photodetectors based on the spectral profile of the autofluorescence.
65. The non-transitory computer readable storage medium according to clause 64, wherein the non-transitory computer readable storage medium comprises algorithm for selecting the photodetector channel based on a maximal intensity of the autofluorescence.
66. The non-transitory computer readable storage medium according to any one of clauses 61-65, wherein the non-transitory computer readable storage medium comprises algorithm for generating one or more population clusters by dimensionality reduction.
67. The non-transitory computer readable storage medium according to clause 66, wherein the dimensionality reduction comprises Uniform Manifold Approximation and Projection (UMAP) or t-distributed stochastic neighbor embedding (t-SNE).
68. The non-transitory computer readable storage medium according to any one of clauses 61-65, wherein the non-transitory computer readable storage medium comprises algorithm for generating one or more population clusters by K-nearest neighbors (KNN) clustering.
69. The non-transitory computer readable storage medium according to any one of clauses 61-68, wherein the non-transitory computer readable storage medium further comprises algorithm for generating an image of the cell from the image data.
70. The non-transitory computer readable storage medium according to clause 69, wherein the non-transitory computer readable storage medium further comprises algorithm for calculating an image parameter based on one or more of the image data and the image of the cell.
71. The non-transitory computer readable storage medium according to clause 70, wherein the image parameters are selected from the group consisting of center of mass, delta center of mass, diffusivity, eccentricity, long axis moment, maximum intensity, radial moment, short axis moment, size, total intensity, light loss by the cell nuclei, forward scattered light by the cell nuclei, side scattered light by the cell nuclei and combinations thereof.
72. The non-transitory computer readable storage medium according to any one of clauses 61-71, wherein the non-transitory computer readable storage medium comprises algorithm for quantifying a change in the cells of the sample.
73. The non-transitory computer readable storage medium according to clause 72, wherein the non-transitory computer readable storage medium comprises algorithm for quantifying the change in the cells by quantifying a change in the autofluorescence spectra of the cells in the sample.
74. The non-transitory computer readable storage medium according to any one of clauses 72-73, wherein the non-transitory computer readable storage medium comprises algorithm for quantifying the change in the cells by quantifying a change in an image parameter of the cells.
75. The non-transitory computer readable storage medium according to any one of clauses 72-74, wherein the non-transitory computer readable storage medium comprises algorithm for determining heterogeneity of the cells based on a change in the autofluorescence spectra of the cells.
76. The non-transitory computer readable storage medium according to any one of clauses 72-74, wherein the non-transitory computer readable storage medium comprises algorithm for determining the heterogeneity of the cells based on a change in autofluorescence intensity measured from the cells.
77. The non-transitory computer readable storage medium according to any one of clauses 72-76, wherein the non-transitory computer readable storage medium comprises algorithm for determining the heterogeneity of the cells based on a change in the imaging parameters of one or more population clusters.
78. The non-transitory computer readable storage medium according to clause 77, wherein the change in the imaging parameters comprises one or more of eccentricity, center of mass and size.
79. The non-transitory computer readable storage medium according to any one of clauses 61-78, wherein the cells are selected from the group consisting of autotrophic cells, heterotrophic cells, tumor cells, immune cells, bacteria and lineage-labeled cells.
80. The non-transitory computer readable storage medium according to any one of clauses 61-79, wherein the method further comprises determining one or more sorting gates for the classified cells of the sample.
81. The non-transitory computer readable storage medium according to clause 80, wherein the one or more sorting gates capture cells of a target particle population cluster and exclude cells of a non-target particle population cluster.
82. The non-transitory computer readable storage medium according to clause 81, wherein the sorting gates maximize the inclusion yield of cells of a target particle population cluster.
83. The non-transitory computer readable storage medium according to any one of clauses 80-82, wherein the sorting gates maximize the exclusion of cells of a non-target particle population cluster.
84. The non-transitory computer readable storage medium according to any one of clauses 61-83, wherein the non-transitory computer readable storage medium comprises algorithm for sorting cells of the sample into a plurality of sample containers.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its scope. Furthermore, all examples and conditional language recited herein are principally intended to aid the reader in understanding the principles of the disclosure and the concepts contributed by the disclosure to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

## Claims

1. A system comprising:
a light source configured to irradiate cells of a sample with light in a flow stream;
a light detection system comprising an imaging photodetector and a spectral photodetector for measuring light from the irradiated cells; and
a processor comprising memory operably coupled to the processor wherein the memory comprises instructions stored thereon, which when executed by the processor, cause the processor to:
measure autofluorescence spectra generated by the cells in the sample with the spectral photodetector;
calculate a cell parameter based on image data generated from the measured light;
generate one or more population clusters based on the measured autofluorescence spectra and the calculated cell parameter;
assess morphological heterogeneity of the cells in each of the population clusters; and
classify particles of the population clusters based on the assessed morphological heterogeneity.

2. The system according to claim 1, wherein the light detection system comprises imaging and spectral photodetector channels.

3. The system according to claim 2, wherein the light detection system is configured to measure the autofluorescence spectra by the imaging photodetector in the imaging channel.

4. The system according to any one of claims 2 to 3, wherein light detection system is configured to measure the autofluorescence spectra by the spectral photodetector in the spectral channel.

5. The system according to any one of claims 2-4, wherein the light detection system comprises a plurality of spectral photodetectors and the memory comprises instructions for selecting the one photodetector channel of the plurality of spectral photodetectors based on the spectral profile of the autofluorescence.

6. The system according to claim 5, wherein the memory comprises instructions for selecting the one photodetector channel based on a maximal intensity of the autofluorescence.

7. The system according to any one of claims 1-6, wherein the memory comprises instructions for generating one or more population clusters by dimensionality reduction or K-nearest neighbors (KNN) clustering.

8. The system according to any one of claims 1-7, wherein the memory further comprises instructions for generating an image of the cell from the image data.

9. The system according to claim 8, wherein the memory further comprises instructions for calculating an image parameter based on one or more of the image data and the image of the cell.

10. The system according to claim 9, wherein the image parameters are selected from the group consisting of center of mass, delta center of mass, diffusivity, eccentricity, long axis moment, maximum intensity, radial moment, short axis moment, size, total intensity, light loss by the cell nuclei, forward scattered light by the cell nuclei, side scattered light by the cell nuclei and combinations thereof.

11. The system according to any one of claims 1-10, wherein the memory further comprises instructions for quantifying a change in the cells of the sample.

12. The system according to claim 11, wherein the memory comprises instructions for quantifying the change in the cells by quantifying a change in the autofluorescence spectra of the cells in the sample.

13. The system according to any one of the preceding claims, wherein the memory further comprises instructions for determining one or more sorting gates for the classified cells of the sample.

14. A method comprising:
irradiating a sample comprising cells in a flow stream with a light source in a flow cytometer;
measuring light from the irradiated cells with an imaging photodetector;
measuring autofluorescence spectra generated by the irradiated cells in the sample with a spectral photodetector;
calculating a cell parameter based on image data generated from the measured light;
generating one or more population clusters based on the measured autofluorescence spectra and the calculated cell parameter;
assessing morphological heterogeneity of the cells in each of the population clusters; and
classifying cells of the population clusters based on the assessed morphological heterogeneity.

15. A non-transitory computer readable storage medium comprising instructions stored thereon wherein the non-transitory computer readable storage medium comprises:
algorithm for irradiating a sample comprising cells in a flow stream;
algorithm for measuring light from the irradiated cells with an imaging photodetector;
algorithm for measuring autofluorescence spectra generated by the irradiated cells in the sample with a spectral photodetector;
algorithm for calculating a cell parameter based on image data generated from the measured light;
algorithm for generating one or more population clusters based on the measured autofluorescence spectra and the calculated cell parameter;
algorithm for assessing morphological heterogeneity of the cells in each of the population clusters; and
algorithm for classifying particles of the population clusters based on the assessed morphological heterogeneity.
